(19) Europäisches Patentamt
European Patent Office
Office européen des brevets

(11) EP 2 049 584 B1

(12) EUROPÄISCHE PATENTSCHRIFT

(45) Veröffentlichungstag und Bekanntmachung des Hinweises auf die Patenterteilung:
**14.07.2010 Patentblatt 2010/28**

(21) Anmeldenummer: **07787685.2**

(22) Anmeldetag: **18.07.2007**

(51) Int Cl.:
***C08G 64/38*** *(2006.01)*

(86) Internationale Anmeldenummer:
**PCT/EP2007/057427**

(87) Internationale Veröffentlichungsnummer:
**WO 2008/012252 (31.01.2008 Gazette 2008/05)**

(54) **HOCHFUNKTIONELLE, HYPERVERZWEIGTE POLYCARBONATE SOWIE DEREN HERSTELLUNG UND VERWENDUNG**

HIGHLY FUNCTIONAL, HYPERBRANCHED POLYCARBONATES AND PRODUCTION AND USE THEREOF

POLYCARBONATES HAUTEMENT FONCTIONNELS HYPERRAMIFIES, AINSI QUE LEUR PREPARATION ET LEUR UTILISATION

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **26.07.2006 EP 06117852**

(43) Veröffentlichungstag der Anmeldung:
**22.04.2009 Patentblatt 2009/17**

(73) Patentinhaber: **BASF SE**
**67056 Ludwigshafen (DE)**

(72) Erfinder:
- **BRUCHMANN, Bernd**
  **67251 Freinsheim (DE)**
- **ASSMANN, Jens**
  **68165 Mannheim (DE)**
- **SCHWITTAY, Claudius**
  **B-2000 Antwerpen (BE)**
- **SCHÄFER, Harald**
  **68219 Mannheim (DE)**

(56) Entgegenhaltungen:
**WO-A-2006/042673**

- **BOLTON D H ET AL: "SYNTHESIS AND CHARACTERIZATION OF HYPERBRANCHED POLYCARBONATES" MACROMOLECULES, ACS, WASHINGTON, DC, US, Bd. 30, Nr. 7, 7. April 1997 (1997-04-07), Seiten 1890-1896, XP000684813 ISSN: 0024-9297**
- **SCHEEL A., KOMBER H., VOIT B.: "Hyperbranched thermolabile polycarbonates derived from a A2+B3 monomer system" MACROMOLECULAR SYMPOSIA, Bd. 210, 2004, Seiten 101-110, XP002458096**
- **DATABASE CA [Online] CHEMICAL ABSTRACTS SERVICE, COLUMBUS, OHIO, US; OGAWA, NORIYOSHI ET AL: "Thermal discoloration- and impact-resistant branched polycarbonates and their manufacture" XP002458339 gefunden im STN Database accession no. 132:251875 & JP 2000 095853 A (MITSUBISHI GAS CHEMICAL CO., LTD., JAPAN) 4. April 2000 (2000-04-04)**
- **DATABASE CA [Online] CHEMICAL ABSTRACTS SERVICE, COLUMBUS, OHIO, US; YAMADA, SOICHI ET AL: "Aromatic carboxylic esters containing hindered amine group, their manufacture, and their use" XP002458340 gefunden im STN Database accession no. 127: 109319 & JP 09 143161 A (NIPPON SHOKUBAI KAGAKU KOGYO CO., LTD., JAPAN) 3. Juni 1997 (1997-06-03)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 049 584 B1

**Beschreibung**

Die vorliegende Erfindung betrifft hochfunktionelle hyperverzweigte Polycarbonate mit stabilisierend wirkenden Gruppen, hergestellt durch Umsetzung von

(a) mindestens einer Verbindung mit mindestens drei alkoholischen Hydroxylgruppen pro Molekül mit
(b) mindestens einem Reagenz der allgemeinen Formel I

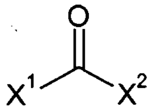

I

(c) und mindestens einem Reagenz der allgemeinen Formel $X^3$-$(A^1)_m$-$X^4$,
wobei die Variablen wie folgt definiert sind:

$X^1$, $X^2$ gleich oder verschieden und gewählt aus Halogen, $C_1$-$C_{10}$-Alkoxy, $C_6$-$C_{10}$-Aryloxy und O-C(=O)-Halogen,

$X^3$ eine funktionelle Gruppe, gewählt aus OH, SH, $NH_2$, NH-$C_1$-$C_4$-Alkyl, Isocyanat, Epoxy, COOH, $COOR^{12}$, C (=O)-O-C(=O), C(=O)-Cl,
$R^{12}$ $C_1$-$C_4$-Alkyl oder $C_6$-$C_{10}$-Aryl,
$A^1$ ein Spacer oder eine Einfachbindung,
m Null oder eins,
$X^4$ eine Gruppe, gewählt aus Phenolgruppen, Benzophenonen, aromatischen Ami- nen und stickstoffhaltigen Heterocyclen, jeweils substituiert oder unsubstituiert.

Die erfindungsgemäßen hyperverzweigten Polycarbonate kann man u.a. als Abbruchmittel bei der Herstellung von Thermoplasten oder Duroplasten einsetzen, zur Stabilisierung von Thermoplasten und Duroplasten beispielsweise gegen oxidativen, thermischen oder strahlungsinduzierten Abbau, weiterhin als Zusatz in Lacksystemen und Beschichtungen.
Aus WO 01/48057 sind multifunktionale Stabilisatoren gegen thermische und oxidative Zersetzung bekannt. Sie sind erhältlich durch beispielsweise Amidierung von Polyaminen wie beispielsweise tris-(2-Aminoethyl)-amin oder Dendrimeren wie beispielsweise 4-Kaskade:1,4-Diaminobutan[4]:propylamin mit 3-para-Phenolpropionsäurederivaten. Die beschriebenen Substanzen sind nur durch mehrstufige Reaktionen zu erhalten. Außerdem handelt es sich bei ihnen in der Regel um zähe oder bei Zimmertemperatur feste Substanzen, die sich schlecht dosieren lassen.
In WO 02/092668 werden hyperverzweigte oder dendrimere Polymere aus multifunktionalen Monomeren beschrieben, die beispielsweise Oxidationsstabilisatoren oder thermische Stabilisatoren kovalent angebunden enthalten. Als hyperverzweigte oder dendrimere Polymere aus multifunktionalen Monomeren werden beispielsweise Polyester aus 1,1-Dimethylolpropionsäure oder Polyethylenglykol und 1,1-Dimethylolpropionsäure vorgeschlagen. Die offenbarten dendrimeren oder hyperverzweigten Polymere, die beispielsweise Oxidationsstabilisatoren oder thermische Stabilisatoren kovalent angebunden enthalten, zeigen eine geringe Tendenz zum Migrieren oder Ausblühen. Jedoch sind derartige dendrimeren oder hyperverzweigten Polyester, die beispielsweise Oxidationsstabilisatoren oder thermische Stabilisatoren kovalent angebunden enthalten, üblicherweise entweder sehr viskos oder fest und in vielen Fällen, insbesondere bei der Herstellung von Klarlacken, schlecht zu dosieren und schlecht unterzumischen.
E. Malmstroem Jonsson et al. (Polymer Degradation and Stability 2002, 76, 503 - 509) beschreiben die Herstellung von dendritischen Polyestern auf Basis 1,1-Dimethylolpropionsäure und Pentaerythrit, die mit phenolischen Antioxidantien modifiziert sind. Die resultierenden Produkte werden als gelbe Feststoffe erhalten.
Aufgabe der vorliegenden Erfindung war es, Stabilisatoren bereitzustellen, welche die aus dem Stand der Technik bekannten Nachteile vermeiden, die gegen verschiedene Schädigungsmechanismen wirksam sind und vorteilhafte Eigenschaften aufweisen. Die Stabilisatoren sollen gegen Schädigungen durch UV-Strahlung, Wärme, Hydrolyse, Sauerstoff oder Ozon wirksam sein und eine oder mehrere der nachstehenden vorteilhaften Eigenschaften besitzen, nämlich

- eine geringe Flüchtigkeit aufweisen,
- nicht zum Ausblühen oder Ausbluten neigen,
- nicht aus dem Polymeren ausgewaschen werden,
- gut mischbar und einarbeitbar sein,

- eine hohe Wirkstoffgruppenkonzentrationhaben, bezogen auf das Gesamtgewicht des Stabilisators,
- sich anwendungsspezifisch in einer flüssigen Komponente emulgieren oder lösen lassen können,
- sich leicht und nach gleichen oder ähnlichen Verfahren synthetisieren lassen.

Es bestand weiterhin die Aufgabe, Stabilisatoren bereit zu stellen, die sich insbesondere zur Herstellung von Thermoplasten oder Duroplasten, von Beschichtungen oder von Lacksystemen eignen.

Polyoxymethylenhomo- und -copolymere (POM, auch Polyacetale genannt) werden durch Polymerisation von Formaldehyd, 1,3,5-Trioxan (kurz: Trioxan) oder einer anderen Formaldehydquelle erhalten, wobei zur Herstellung von Copolymeren Comonomere wie 1,3-Dioxolan, 1,3-Butandiolformal oder Ethylenoxid mitverwendet werden. Die Polymere sind bekannt und zeichnen sich durch eine Anzahl ausgezeichneter Eigenschaften aus, so dass sie für die verschiedensten technischen Anwendungen geeignet sind.

Die Polymerisation wird üblicherweise kationisch durchgeführt; dazu werden starke Protonensäuren, beispielsweise Perchlorsäure, oder Lewis-Säuren wie Zinntetrachlorid oder Bortrifluorid, als Initiatoren (Katalysatoren) in den Reaktor dosiert. Die Polymerisation kann vorteilhaft in der Schmelze durchgeführt werden, siehe z.B. EP 0 080 656 A1, EP 0 638 357 A2 und EP 0 638 599 A2.

Anschließend bricht man die Reaktion üblicherweise durch Zudosieren von basischen Desaktivatoren ab. Bei den bisher verwendeten Desaktivatoren handelt es sich um basische organische oder anorganische Verbindungen. Die organischen Desaktivatoren sind monomere Verbindungen, beispielsweise Amine wie Triethylamin oder Triacetondiamin, (Erd)alkalimetallsalze von Carbonsäuren, beispielsweise Natriumacetat, (Erd)alakalialkoholate wie Natriummethanolat oder (Erd)alkalialkyle wie n-Butyllithium. Der Siede- bzw. Zersetzungspunkt dieser organischen Verbindungen liegt üblicherweise bei unter 170°C (1013 mbar). Als anorganische Desaktivatoren eignen sich u.a. Ammoniak, basische Salze wie (Erd)alkalimetallcarbonate, z.B. Soda, oder -hydroxide, sowie Borax, die üblicherweise als Lösung eingesetzt werden.

Der Umsatz bei der Polymerisation ist üblicherweise nicht vollständig, vielmehr enthält das POM-Rohpolymerisat noch bis zu 40 % nicht umgesetzter Monomere. Solche Restmonomere sind beispielsweise Trioxan und Formaldehyd, sowie ggf. mitverwendete Comonomere wie 1,3-Dioxolan, 1,3-Butandiolformal oder Ethylenoxid. Die Restmonomere werden in einer Entgasungsvorrichtung abgetrennt. Es wäre ökonomisch vorteilhaft, sie unmittelbar in die Polymerisation zurückzuführen.

Jedoch sind die abgetrennten Restmonomere oftmals mit den Desaktivatoren verunreinigt, und eine Rückführung dieser Desaktivator-haltigen Restmonomere in den Reaktor verschlechtert die Produkteigenschaften und verlangsamt die Polymerisation oder bringt sie vollständig zum Erliegen. Aufgrund des erwähnten hohen Siede- bzw. Zersetzungspunktes der organischen Desaktivatoren lassen sich diese in der Regel nicht durch einfache Destillation abtrennen.

Es bestand die Aufgabe, den geschilderten Nachteilen abzuhelfen. Es sollte ein Verfahren zur POM-Herstellung gefunden werden, bei dem die Desaktivierung auf einfache Weise erfolgt und keine Folgemaßnahmen wie beispielsweise Reinigung der zurückgeführten Restmonomere erfordert, die die Wirtschaftlichkeit des Gesamtverfahrens verschlechtern.

Das Verfahren sollte es ermöglichen, den Desaktivator in einfacher Weise zuzudosieren, bevorzugt in flüssiger Form oder gelöst in solchen Lösungsmitteln, die sich unter den Verfahrensbedingungen inert verhalten.

Außerdem sollten sich die Restmonomere auf einfache Weise, insbesondere ohne zwischengeschaltete Reinigungsschritte, in das Verfahren zurückführen lassen.

Dementsprechend wurden die eingangs definierten hyperverzweigten Polycarbonate gefunden.

Erfindungsgemäße hyperverzweigte Polycarbonate sind molekular und strukturell uneinheitlich. Sie unterscheiden sich beispielsweise durch ihre molekulare Uneinheitlichkeit von Dendrimeren und sind mit erheblich geringerem Aufwand herzustellen.

Unter hyperverzweigten Polycarbonaten werden im Rahmen dieser Erfindung unvernetzte Makromoleküle mit Hydroxyl- und Carbonat- oder Carbamoylchloridgruppen verstanden, die sowohl strukturell als auch molekular uneinheitlich sind. Sie können in einer Variante der vorliegenden Erfindung ausgehend von einem Zentralmolekül analog zu Dendrimeren, jedoch mit uneinheitlicher Kettenlänge der Äste aufgebaut sein. Sie können in einer anderen Variante der vorliegenden Erfindung linear, mit funktionellen Seitengruppen, aufgebaut sein oder aber, als Kombination der beiden Extreme, lineare und verzweigte Molekülteile aufweisen. Zur Definition von dendrimeren und hyperverzweigten Polymeren siehe auch P.J. Flory, J. Am. Chem. Soc. 1952, 74, 2718 und H. Frey et al., Chem. Eur. J. 2000, 6, No. 14, 2499.

Unter "hyperverzweigt" wird im Zusammenhang mit der vorliegenden Erfindung verstanden, dass der Verzweigungsgrad (Degree of Branching, DB) 10 bis 99,9 %, bevorzugt 20 bis 99 %, besonders bevorzugt 20 bis 95 % beträgt.

Unter "dendrimer" wird im Zusammenhang mit der vorliegenden Erfindung verstanden, daß der Verzweigungsgrad 99,9 - 100% beträgt. Zur Definition des "Degree of Branching" siehe H. Frey et al., Acta Polym. 1997, 48, 30.

Der Verzweigungsgrad DB (degree of branching) der betreffenden Stoffe ist definiert als

$$DB = \frac{T + Z}{T + Z + L} \times 100\ \%,$$

wobei T die mittlere Anzahl der terminalen Monomereinheiten, Z die mittlere Anzahl der verzweigten Monomereinheiten und L die mittlere Anzahl der linearen Monomereinheiten in den Makromolekülen der jeweiligen Stoffe bedeuten.

Erfindungsgemäße hyperverzweigte Polycarbonate mit stabilisierend wirkenden Gruppen lassen sich erhalten durch Umsetzung von

(a) mindestens einer Verbindung mit mindestens drei alkoholischen Hydroxylgruppen, im Folgenden auch als Verbindung (a) oder - je nach Zahl der alkoholischen Hydroxylgruppen beispielsweise Triol (a) oder Tetrol (a) oder Pentol (a) genannt, mit

(b) mindestens einem Reagenz der Formel I, im Folgenden auch als Reagenz (b) bezeichnet,

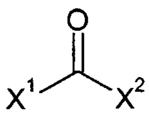

I

(c) und mindestens einem Reagenz der allgemeinen Formel $X^3$-$(A^1)_m$-$X^4$, im Folgenden auch als Reagenz (c) bezeichnet,

wobei die Variablen wie folgt definiert sind:

$X^1$, $X^2$ gleich oder verschieden und gewählt aus Halogen, beispielsweise Brom und insbesondere Chlor, $C_1$-$C_{10}$-Alkoxy, bevorzugt $C_1$-$C_6$-Alkoxygruppen wie Methoxy, Ethoxy, n-Propoxy, iso- Propoxy, n-Butoxy, iso-Butoxy, sec.-Butoxy, tert.-Butoxy, n-Pentoxy, iso-Pentoxy, n-Hexoxy und iso-Hexoxy, besonders bevorzugt Methoxy, Ethoxy, n-Butoxy und tert.-Butoxy;
$C_6$-$C_{10}$-Aryloxy, insbesondere Phenoxy, 1-Naphthoxy, 2-Naphthoxy oder mit $C_1$-$C_4$- Alkyl substituiertes $C_6$-$C_{10}$-Aryloxy, insbesondere o-Tolyloxy oder p-Tolyloxy,
und O-C(=O)-Halogen, insbesondere O-C(=O)-Cl.

Besonders bevorzugte Reagenzien (b) sind Dimethylcarbonat, Diethylcarbonat, Di-n-butylcarbonat, Di-tert.-butylcarbonat, Di-tert.-butyldicarbonat, Di-tert.-butyltricarbonat, Diphenylcarbonat, Ditolylcarbonat, Phosgen, Chlorameisensäureethylester, Diphosgen und Triphosgen.

Verbindung (a) wird gewählt aus Verbindungen mit mindestens drei alkoholischen Hydroxylgruppen, beispielsweise Triolen (a), Tetrolen (a) oder Pentole (a).

Beispiele für geeignete Triole (a) sind aliphatische, aromatische und benzylische Triole, die nicht alkoxyliert oder pro Hydroxylgruppe ein- bis 100-fach alkoxyliert sein können, bevorzugt mit $C_2$-$C_4$-Alkylenoxid alkoxyliert, beispielsweise Ethylenoxid, Propylenoxid oder 1,2-Butylenoxid oder Mischungen aus Ethylenoxid und Propylenoxid und/ oder Butylenoxid, und insbesondere mit Ethylenoxid oder Propylenoxid alkoxyliert.

Beispielhaft seien genannt: Glycerin, Trimethylolmethan, 1,1,1-Trimethylolethan, 1,1,1-Trimethylolpropan, 1,2,4-Butantriol, Tris(hydroxy-methyl)amin, Tris(hydroxyethyl)amin, Tris-(hydroxypropyl)-amin, Tris(hydroxymethyl)isocyanurat, Tris-(hydroxyethyl)-isocyanurat, Phloroglucinol, Trihydroxytoluol, Trihydroxydimethylbenzol, Phloroglucide, 1,3,5-Benzoltrimethanol, 1,1,1-Tris(4'-hyd roxy-phenyl)methan, 1,1,1-Tris(4'-hydroxyphenyl)-ethan, tri- oder höherfunktionelle Polyetherole auf Basis tri- oder höherfunktioneller Alkohole und Ethylenoxid, Propylenoxid oder Butylenoxid, oder Polyesterole. Dabei sind Glycerin, 1,1,1-Trimethylolpropan sowie deren Polyetherole auf Basis von Ethylenoxid oder Propylenoxid besonders bevorzugt.

Als bevorzugte Beispiele seien genannt seien Glycerin und $(HO\text{-}CH_2)_3C\text{-}X^7$, nicht alkoxyliert oder pro Hydroxylgruppe ein- bis hundertfach mit $C_2$-$C_4$-Alkylenoxid alkoxyliert, wobei $X^7$ gewählt wird aus einem Stickstoffatom und C-$R^6$ und $R^6$ gewählt wird aus Wasserstoff und $C_1$-$C_4$-Alkyl, wie Methyl, Ethyl, n-Propyl, iso-Propyl, n-Butyl, iso-Butyl, sec.-Butyl und tert.-Butyl. Ganz besonders bevorzugt sind Glycerin, Trimethylolethan, Trimethylolpropan, 1,2,4-Butantriol, ein- bis zehnfach ethoxyliertes Glycerin und einbis zehnfach ethoxyliertes 1,1,1-Trimethylolpropan ($R^6 = C_2H_5$).

Beispiele für geeignete Tetrole (a) sind Pentaerythrit, Bis(tri-methylolpropan) und Diglycerin, die nicht alkoxyliert

oder pro Hydroxylgruppe ein- bis 100-fach alkoxyliert sein können, bevorzugt mit $C_2$-$C_4$-Alkylenoxid alkoxyliert, beispielsweise Ethylenoxid, Propylenoxid oder 1,2-Butylenoxid oder Mischungen aus Ethylenoxid und Propylenoxid und/oder Butylenoxid, und insbesondere mit Ethylenoxid oder Propylenoxid alkoxyliert.

Beispiele für geeignete Pentole (a) umfassen auch Verbindungen mit mehr als 5 alkoholischen Hydroxylgruppen pro Molekül. Genannt seien Triglycerin, Polyglycerine, Hexahydroxybenzol, oder Zucker, wie zum Beispiel Sorbose, Mannose oder Glucose, insbesondere reduzierte Zucker wie beispielsweise Sorbitol, die nicht alkoxyliert oder pro Hydroxylgruppe ein- bis 100-fach alkoxyliert sein können, bevorzugt mit $C_2$-$C_4$-Alkylenoxid alkoxyliert, beispielsweise Ethylenoxid, Propylenoxid oder 1,2-Butylenoxid oder Mischungen aus Ethylenoxid und Propylenoxid und/oder Butylenoxid, und insbesondere mit Ethylenoxid oder Propylenoxid alkoxyliert.

Weiterhin setzt man mit mindestens einem Reagenz der allgemeinen Formel $X^3$-$(A^1)_m$-$X^4$ um, im Rahmen der vorliegenden Erfindung auch als Reagenz (c) bezeichnet, wobei

$X^3$ eine funktionelle Gruppe, gewählt aus OH, SH, $NH_2$, NH-$C_1$-$C_4$-Alkyl, wobei $C_1$-$C_4$- Alkyl gewählt wird aus Methyl, Ethyl, n-Propyl, iso-Propyl, n-Butyl, iso-Butyl, sec.- Butyl und tert.-Butyl, wie NH-$CH_3$, NH-$C_2H_5$, NH-n-$C_3H_7$, NH-iso-$C_3H_7$, NH-n-$C_4H_9$, NH-iso-$C_4H_9$, NH-sec.-$C_4H_9$, NH-tert.-$C_4H_9$, weiterhin Isocyanat, Epoxy wie beispielsweise

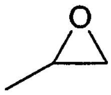

oder

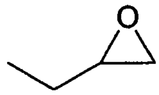

COOH, $COOR^{12}$, C(=O)-O-C(=O), C(=O)-Cl, bevorzugt sind COOH, $COOR^{12}$, OH und $NH_2$,

$R^{12}$ $C_1$-$C_4$-Alkyl oder $C_6$-$C_{10}$-Aryl

$A^1$ eine Einfachbindung oder ein Spacer, Beispiele für Spacer $A^1$ sind para- Phenylen, meta-Phenylen, bevorzugt $C_2$-$C_{100}$-Alkylen, bevorzugt $C_2$-$C_{50}$-Alkylen, besonders bevorzugt bis $C_{20}$-Alkylen, verzweigt oder unverzweigt, wobei gege- benenfalls ein bis 6 nicht-benachbarte $CH_2$-Gruppen durch jeweils ein Schwefel- atom, auch oxidiert, oder Sauerstoffatom ersetzt sein können. Beispielhaft seien folgende Spacer genannt:

$-CH_2-$, $-CH_2-CH_2-$, $-(CH_2)_3-$, $-(CH_2)_4-$, $-(CH_2)_5-$, $-(CH_2)_6-$, $-(CH_2)_7-$, $-(CH_2)_8-$, $-(CH_2)_9-$, $-(CH_2)_{10}-$, $-(CH_2)_{12}-$, $-(CH_2)_{14}-$, $-(CH_2)_{16}-$, $-(CH_2)_{18}-$, $-(CH_2)_{20}-$, $-CH_2-CH(CH_3)-$, $-CH_2-CH(C_2H_5)-$, $-CH_2-CH(CH[CH_3]_2)-$, -$CH_2$-CH(n-$C_3H_7$)-, $-[CH(CH_3)]_2-$, $-CH(CH_3)-CH_2-CH_2-CH(CH_3)-$, $-CH(CH_3)-CH_2-CH(CH_3)-$, $-CH_2-C(CH_3)_2-CH_2-$, -$CH_2$-CH (n-$C_4H_9$)-, -$CH_2$-CH(iso-$C_3H_7$)-, -$CH_2$-CH(tert.-$C_4H_9$)-,

$-CH_2-O-$, $-CH_2-O-CH_2-$, $-(CH_2)_2-O-(CH_2)_2-$, $-[(CH_2)_2-O]_2-(CH_2)_2-$,

$-CH_2-S-$, $-CH_2-S-CH_2-$, $-(CH_2)_2-S-(CH_2)_2-$, $-[(CH_2)_2-S]_2-(CH_2)_2-$, $-[(CH_2)_2-S]_3-(CH_2)_2-$, $-CH_2-SO-CH_2-$, $-CH_2-SO_2-CH_2-$,

ganz besonders bevorzugte Spacer sind $C_1$-$C_{10}$-Alkylengruppen, verzweigt oder unverzweigt, wie $-CH_2-$, $-CH_2-CH_2-$, $-(-CH_2)_3-$, $-(CH_2)_4-$, $-(CH_2)_5-$, $-(CH_2)_6-$, $-(CH_2)_7-$, $-(CH_2)_8-$, $-(CH_2)_9-$, $-(CH_2)_{10}-$.

m Null oder eins,

$X^4$ eine Gruppe, gewählt aus Phenolgruppen, Benzophenonen, aromatischen Ami- nen und stickstoffhaltigen Heterocyclen, jeweils substituiert oder unsubstituiert.

Dabei übernimmt $X^4$ die Rolle der stabilisierend wirkenden Gruppe.

Beispiele für Phenolgruppen sind insbesondere sterisch gehinderte Phenolgruppen, beispielsweise mit einer oder zwei Isopropylgruppen oder tert.-Butylgruppen in ortho-Stellung zur phenolischen OH-Gruppe substituierte Phenolgruppen. Besonders bevorzugte Beispiele für Phenolgruppen sind

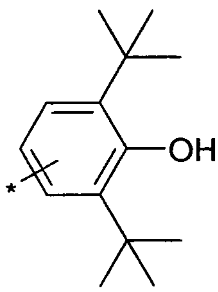
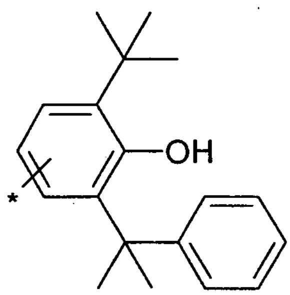
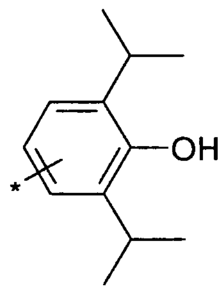

Ganz besonders bevorzugte Beispiele für Phenolgruppen ist die 3-(3,5-Di-tert.-butyl-4-hydroxyphenyl)propionsäuregruppe.

Beispiele für Benzphenongruppen sind insbesondere

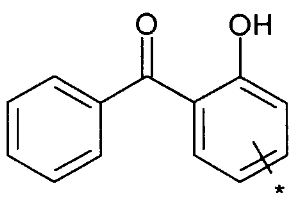
und
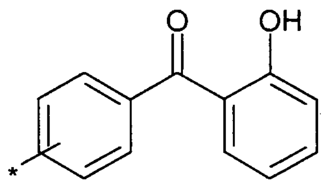

Beispiele für aromatische Amine sind

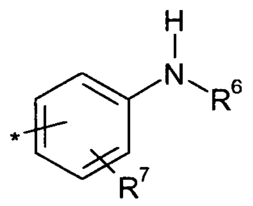

wobei die Variablen wie folgt definiert sind:

$R^6$ ist gewählt aus Wasserstoff, $C_1$-$C_{12}$-Alkyl wie beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl; besonders bevorzugt $C_1$-$C_4$-Alkyl wie Methyl, Ethyl, n-Propyl, iso-Propyl, n-Butyl, iso-Butyl, sec.-Butyl und tert.-Butyl,

$C_3$-$C_{12}$-Cycloalkyl, wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl,
$C_6$-$C_{14}$-Aryl, beispielsweise 1-Naphthyl, 2-Naphthyl, 1-Anthracenyl, 2-Anthracenyl, 9-Anthracenyl und insbesondere Phenyl,
Benzyl.

$R^7$ ist gewählt aus Wasserstoff,
$C_1$-$C_4$-Alkyl, Methyl, Ethyl, n-Propyl, iso-Propyl, n-Butyl, iso-Butyl, sec.-Butyl und tert.-Butyl.

Stickstoffhaltige Heterocyclen können aromatisch, einfach ungesättigt oder gesättigt sein. Stickstoffhaltige Heterocyclen können einen, zwei oder drei Stickstoffatome enthalten, und sie können einen oder mehrere Substituenten tragen, bevorzugt sind im Falle von aromatischen Heterocyclen ein oder mehrere Hydroxyphenylsubstituenten. Beispiele für aromatische Heterocyclen sind Benzotriazole und Triazine, insbesondere der Formeln

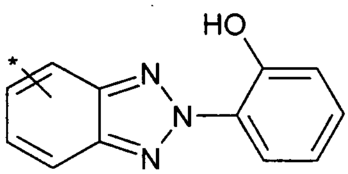

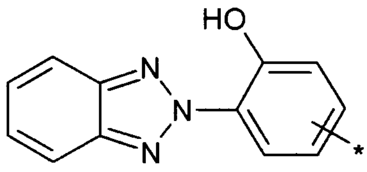

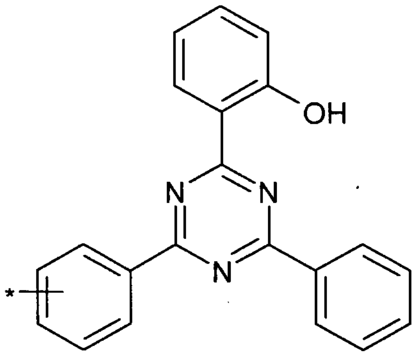

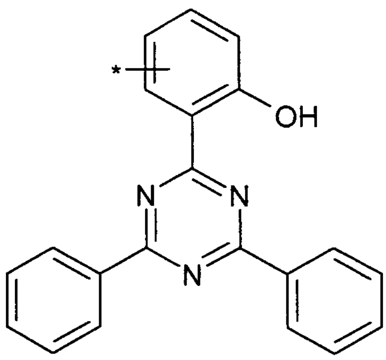

die jeweils einen oder mehrere weitere Substituenten tragen können, beispielsweise Hydroxyl oder $C_1$-$C_4$-Alkyl, insbesondere tert.-Butyl, weiterhin $C(CH_3)_2(C_6H_5)$ oder $C(CH_3)_2OH$ oder Perfluor-$C_1$-$C_4$-alkyl, insbesondere $CF_3$ oder n-$C_4F_9$. Spezifische Beispiele für Stickstoffhaltige aromatische Heterocyclen mit einem oder mehreren Substituenten sind

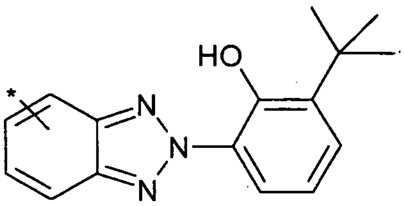

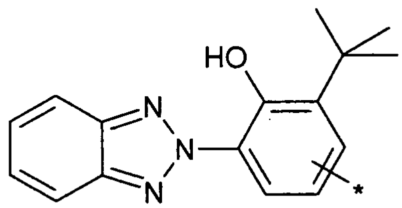

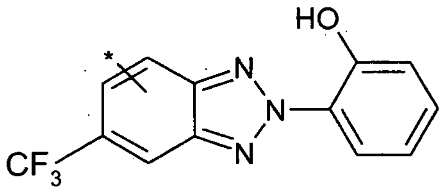

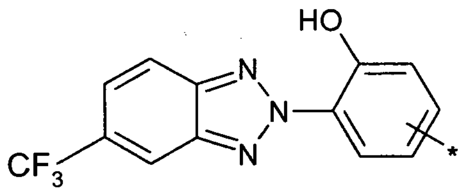

Beispiele für gesättigte stickstoffhaltige Heterocyclen sind insbesondere die als HALS (Hindered Amine Light Stabilizer) bekannten Substituenten der Formel Formel II a soeiw solche der Formel II b,

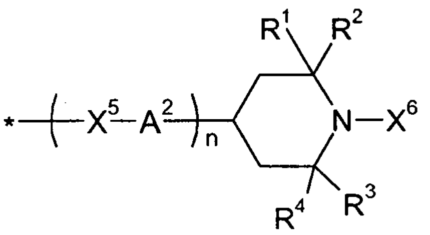

II a

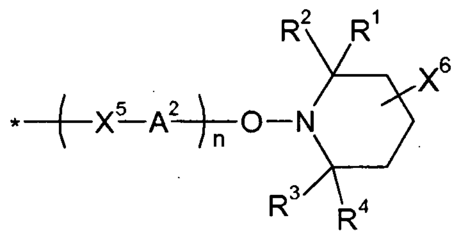

II b

wobei die Variablen wie folgt definiert sind:

$R^1$, $R^2$, $R^3$ und $R^4$ gleich oder verschieden und unabhängig voneinander $C_1$-$C_{12}$-Alkyl wie beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl; besonders bevorzugt $C_1$-$C_4$-Alkyl wie Methyl, Ethyl, n-Propyl, iso-Propyl, n-Butyl, iso-Butyl, sec.-Butyl und tert.-Butyl, insbesondere sind $R^1$, $R^2$, $R^3$ und $R^4$ jeweils gleich und jeweils Methyl,

$C_3$-$C_{12}$-Cycloalkyl, wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl,

$X^5$ ein Sauerstoffatom, ein Schwefelatom, eine NH-Gruppe, eine N-($C_1$-$C_4$-Alkyl)- gruppe, eine Carbonylgruppe,

$A^2$ eine Einfachbindung oder ein Spacer. Beispiele für Spacer $A^2$ sind para- Phenylen, meta-Phenylen, bevorzugt $C_1$-$C_{20}$-Alkylen, verzweigt oder unverzweigt, wobei gegebenenfalls ein bis 6 nicht-benachbarte $CH_2$-Gruppen durch jeweils ein Schwefelatom, auch oxidiert, oder ein Sauerstoffatom ersetzt sein können. Bei- spielhaft seien folgende Spacer genannt:

$-CH_2-$, $-CH_2-CH_2-$, $-(CH_2)_3-$, $-(CH_2)_4-$, $-(CH_2)_5-$, $-(CH_2)_6-$, $-(CH_2)_7-$, $-(CH_2)_8-$, $-(CH_2)_9-$, $-(CH_2)_{10}-$, $-(CH_2)_{12}-$, $-(CH_2)_{14}-$, $-(CH_2)_{16}-$, $-(CH_2)_{18}-$, $-(CH_2)_{20}-$, $-CH_2-CH(CH_3)-$, $-CH_2-CH(C_2H_5)-$, $-CH_2-CH(CH[CH_3]_2)-$, $-CH_2-CH(n-C_3H_7)-$, $-[CH(CH_3)]_2-$, $-CH(CH_3)-CH_2-CH_2-CH(CH_3)-$, $-CH(CH_3)-CH_2-CH(CH_3)-$, $-CH_2-C(CH_3)_2-CH_2-$, $-CH_2-CH(n-C_4H_9)-$, $-CH_2-CH(iso-C_3H_7)-$, $-CH_2-CH(tert.-C_4H_9)-$,

$-CH_2-O-$, $-CH_2-O-CH_2-$, $-(CH_2)_2-O-(CH_2)_2-$, $-[(CH_2)_2-O]_2-CH_2)_2-$, $-[(CH_2)_2-O]_3-(CH_2)_2-$,

$-CH_2-S-$, $-CH_2-S-CH_2-$, $-(CH_2)_2-S-(CH_2)_2-$, $-[(CH_2)_2-S]_2-(CH_2)_2-$, $-[(CH_2)_2-S]_3-(CH_2)_2-$, $-CH_2-SO-CH_2-$, $-CH_2-SO_2-CH_2-$,

bevorzugte Spacer $A^2$ sind $C_2$-$C_{10}$-Alkylengruppen, verzweigt oder unverzweigt, wie $-CH_2-CH_2-$, $-(CH_2)_3-$, $-(-CH_2)_4-$, $-(CH_2)_5-$, $-(-CH_2)_6-$, $-(CH_2)_7-$, $-(CH_2)_8-$, $-(CH_2)_9-$, $-(CH_2)_{10}-$.

n null oder eins

$X^6$ Wasserstoff, Sauerstoff,
O-$C_1$-$C_{19}$-Alkyl, bevorzugt $C_1$-$C_6$-Alkoxygruppen wie Methoxy, Ethoxy, n-Propoxy, iso-Propoxy, n-Butoxy, iso-Butoxy, sec.-Butoxy, tert.-Butoxy, n-Pentoxy, iso- Pentoxy, n-Hexoxy und iso-Hexoxy, besonders bevorzugt Methoxy oder Ethoxy
$C_1$-$C_{12}$-Alkyl, bevorzugt Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2- Dimethylpropyl, iso-Amyl, n-Hexyl, iso-Hexyl, sec.-Hexyl, n-Heptyl, n-Octyl, 2- Ethylhexyl, n-Nonyl, n-Decyl; besonders bevorzugt $C_{1-}C_4$-Alkyl wie Methyl, Ethyl, n-Propyl, iso-Propyl, n-Butyl, iso-Butyl, sec.-Butyl und tert.-Butyl,
$C_2$-$C_{18}$-Acyl, beispielsweise Acetyl, Propionyl, Butyryl, Benzoyl, Stearyl,
oder Aryloxycarbonyl mit 7 bis 12 C-Atomen, beispielsweise $C_6H_5$-OCO.

Beispiele für besonders gut geeignete HALS sind

4-Amino-2,2,6,6- tetramethylpiperidin, 4-Amino-1,2,2,6,6- pentamethylpiperidin,
4-Hydroxy-2,2,6,6- tetramethylpiperidin,
4-Hydroxy-1,2,2,6,6- pentamethylpiperidin,
4-Amino-2,2,6,6- tetramethylpiperidin-N-oxyl,
4-Hydroxy-2,2,6,6- tetramethylpiperidin-N-oxyl,
4-Acetoxy-2,2,6,6-tetramethylpiperidin,
4-Stearyloxy-2,2,6,6-tetramethylpiperidin,
4-Aryloyloxy-2,2,6,6-tetramethylpiperidin,
4-Methoxy-2,2,6,6-tetramethylpiperidin,
4-Benzoyloxy-2,2,6,6-tetramethylpiperidin,
4-Cyclohexyloxy-2,2,6,6-tetramethylpiperidin,
4-Phenoxy-2,2,6,6-6-tetramethylpiperidin,
4-Benzoxy-2,2,6,6-tetramethylpiperidin, und
4-(Phenylcarbamoyloxy)-2,2,6,6-tetramethylpiperidin.

Ebenfalls bevorzugte HALS sind:

Bis(2,2,6,6-tetramethyl-4-piperidyl)oxalat,
Bis-(2,2,6,6-tetramethyl-4-piperidyl)succinat,
Bis(2,2,6,6-tetramethyl-4-piperidyl)malonat,
Bis(2,2,6,6-tetramethyl-4-piperidyl)adipat,
Bis(1,2,2,6,6-pentamethyl-piperidyl)sebacat,
Bis(2,2,6,6-tetramethyl-4-piperidyl)terephthalat,
1,2-bis(2,2,6,6-tetramethyl-4-piperidyloxy)ethan,
Bis(2,2,6,6-tetramethyl-4-piperidyl)hexamethylen-1,6-dicarbamat,
Bis(1-methyl-2,2,6,6-tetramethyl-4-diperidyl)adipat, und
Tris(2,2,6,6-tetramethyl-4-piperidyl)benzol-1,3,5-tricarboxylat.

Darüber hinaus bevorzugt sind höhermolekulare Piperidinderivate, z.B. das Polymer aus Butandisäuredimethylester und 4-Hydroxy-2,2,6,6-tetramethyl-1-piperidinethanol oder Poly-6-(1,1,3,3-tetramethylbutyl)amino-1,3,5-triazin-2,4-diyl(2,2,6,6-tetramethyl-4-piperidinyl)imino-1,6-hexandiyl(2,2,6,6-tetramethyl-14-piperidinyl)imino, und Polykondensate aus Dimethylsuccinat und 1-(2-hydroxyethyl)-4-hydroxy-2,2,6,6-tetramethylpiperidin geeignet, welche wie Bis(2,2,6,6-tetramethyl-4-piperidyl)-sebazat besonders gut geeignet sind.

Ganz besonders gut sind 4-Amino-2,2,6,6- tetramethylpiperidin, 4-Amino-1,2,2,6,6-pentamethylpiperidin, 4-Hydroxy-2,2,6,6- tetramethylpiperidin, 4-Hydroxy-1,2,2,6,6-pentamethylpiperidin, 4-Amino-2,2,6,6- tetramethylpiperidin-N-oxyl und 4-Hydroxy-2,2,6,6- tetramethylpiperidin-N-oxyl geeignet.

In einer Ausführungsform der vorliegenden Erfindung handelt es sich bei stickstoffhaltigen Heterocyclen um eine Gruppe der Formel III

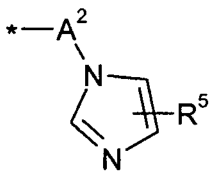

III

wobei die Variablen wie folgt definiert sind:

$R^5$ Wasserstoff oder lineares $C_1$-$C_4$-Alkyl, wie Methyl, Ethyl, n-Propyl, n-Butyl, oder $C_6$-$C_{14}$-Aryl wie beispielsweise Phenyl, 1-Naphthyl oder 2-Naphthyl, oder zwei Reste bilden zusammen ein anelliertes vorzugsweise aromatisches System,

$A^2$ eine Einfachbindung oder ein Spacer, wobei $A^2$ als Spacer wie vorstehend definiert ist.

Bevorzugte Beispiele sind

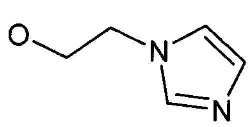

III.1

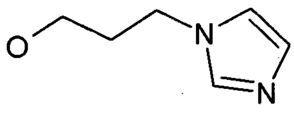

III.2

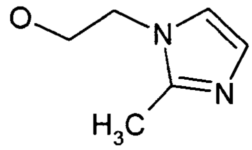

III.3

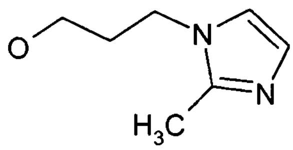

III.4

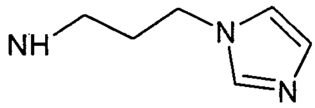

III.5

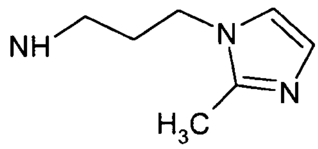

III.6

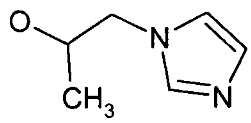

III.7

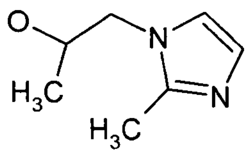

III.8

In einer Ausführungsform der vorliegenden Erfindung sind erfindungsgemäße hyperverzweigte Polycarbonate dadurch gekennzeichnet, dass sie eine dynamische Viskosität im Bereich von 100 bis 150.000 mPa·s, bevorzugt bis 100.000 mPa·s aufweisen, bestimmt bei 23°C, beispielsweise nach DIN 53019.

In einer Ausführungsform der vorliegenden Erfindung weisen erfindungsgemäße hyperverzweigte Polycarbonate ein Zahlenmittel des Molekulargewichtes ($M_n$) von 100 bis 15.000, vorzugsweise von 200 bis 12.000 und insbesondere von 300 bis 10.000 g/mol, bestimmbar beispielsweise mit GPC, Polymethylmethacrylat (PMMA) als Standard und Dimethylacetamid als Laufmittel.

In einer Ausführungsform der vorliegenden Erfindung weisen erfindungsgemäße hyperverzweigte Polycarbonate eine Glastemperatur $T_g$ im Bereich von -70 bis 10°C auf, bestimmt durch Differentialthermoanalyse (Differential Scanning Calorimetry).

In einer Ausführungsform der vorliegenden Erfindung weisen erfindungsgemäße hyperverzweigte Polycarbonate eine OH-Zahl im Bereich von 0 bis 600, vorzugsweise 1 bis 550 und insbesondere von 1 bis 500 mg KOH/g (gemäß DIN 53240, Teil 2) auf.

In einer Ausführungsform der vorliegenden Erfindung setzt man zur Herstellung von erfindungsgemäßem hyperverzweigtem Polycarbonat noch eine oder mehrere Verbindung mit zwei alkoholischen Hydroxylgruppen pro Molekül (d) zu, kurz auch verbindungen (d) genannt. Beispiele geeigneter Verbindungen (d) umfassen Ethylenglykol, Diethylenglykol, Triethylenglykol, 1,2- und 1,3-Propandiol, Dipropylenglykol, Tripropylenglykol, Neopentylglykol, 1,2-, 1,3- und 1,4-Butandiol, 1,2-, 1,3- und 1,5-Pentandiol, Hexandiol, Cyclopentandiol, Cyclohexandiol, Cyclohexandimethanol, Bis (4-Hydroxycyclohexyl)methan, Bis(4-Hydroxycyclo-hexyl)ethan, 2,2-Bis(4-Hydroxycyclohexyl)propan, 1,1'-Bis(4-Hydroxyphenyl)-3,3-5-trimethylcyclohexan, Resorcin, Hydrochinon, 4,4'-Dihydroxyphenyl, Bis-(4-bis(hydroxy-phenyl)sulfid, Bis(4-hydroxyphenyl)sulfon, Bis(hydroxymethyl)benzol, Bis(hydroxy-methyl)toluol, Bis(p-hydroxyphenyl)methan, Bis (p-hydroxyphenyl)ethan, 2,2-Bis(p-hydroxyphenyl)propan, 1,1-Bis(p-hydroxyphenyl)cyclohexan, Dihydroxybenzophenon, difunktionelle Polyetherpolyole auf Basis Ethylenoxid, Propylenoxid, Butylenoxid oder deren Gemische, Polytetrahydrofuran, Polycaprolacton oder Polyesterole auf Basis von Diolen und Dicarbonsäuren.

In einer weiteren Ausführungsform können erfindungsgemäße hyperverzweigte Polycarbonate neben den bereits durch die Reaktion erhaltenden funktionellen Gruppen (Hydroxylgruppen, Carbonatgruppen beispielsweise der Formel O-CO-$OR^1$, Carbamoylchloridgruppen) eine oder mehrere weitere funktionelle Gruppen erhalten. Die Funktionalisierung kann dabei während des Molekulargewichtsaufbaus oder auch nachträglich, d.h. nach Beendigung der eigentlichen Polykondensation erfolgen.

Gibt man vor oder während der eigentlichen Polykondensation Komponenten zu, die neben Hydroxyl- oder

Carbonatgruppen weitere funktionelle Gruppen oder funktionelle Elemente besitzen, so erhält man ein hyperverzweigtes Polycarbonat-Polymer mit statistisch verteilten von den Carbonat-, Carbamoylchlorid oder Hydroxylgruppen verschiedenen Funktionalitäten.

Derartige Effekte lassen sich zum Beispiel durch Zusatz von Verbindungen während der Polykondensation erzielen, die neben Hydroxylgruppen, Carbonatgruppen oder Carbamoylchloridgruppen weitere funktionelle Gruppen oder funktionelle Elemente, wie Mercaptogruppen, primäre, sekundäre oder tertiäre Aminogruppen, Ethergruppen, Carbonsäuregruppen oder deren Derivate, Sulfonsäuregruppen oder deren Derivate, Phosphonsäuregruppen oder deren Derivate, Silangruppen, Siloxangruppen, Arylreste oder langkettige Alkylreste tragen. Zur Modifikation mittels Carbamat-Gruppen lassen sich beispielsweise Ethanolamin, Propanolamin, Isopropanolamin, 2-(Butylamino)-ethanol, 2-(Cyclohexylamino)ethanol, 2-Amino-1-butanol, 2-(2'-Amino-ethoxy)ethanol oder höhere Alkoxylierungsprodukte des Ammoniaks, 4-Hydroxy-piperidin, 1-Hydroxyethylpiperazin, Diethanolamin, Dipropanolamin, Diisopropanol-amin, Tris(hydroxymethyl)aminomethan,Tris(hydroxyethyl)aminomethan, Ethylendiamin, Propylendiamin, Hexamethylendiamin oder Isophorondiamin verwenden.

Für die Modifikation mit Mercaptogruppen lässt sich zum Beispiel Mercaptoethanol einsetzten. Tertiäre Aminogruppen lassen sich zum Beispiel durch Einbau von Triethanolamin, Tripropanolamin, N-Methyldiethanolamin, N-Methyldipropanolamin oder N,N-Dimethylethanolamin erzeugen. Ethergruppen können zum Beispiel durch Einkondensation von di- oder höherfunktionellen Polyetherolen generiert werden. Durch Zugabe von Dicarbonsäuren, Tricarbonsäuren, Dicarbonsäureestern, wie bespielsweise Terephthalsäuredimethylester oder Tricarbonsäureestern lassen sich Estergruppen erzeugen. Durch Reaktion mit langkettigen Alkanolen oder Alkandiolen lassen sich langkettige Alkylreste einbringen. Die Reaktion mit Alkyl- oder Aryldiisocyanaten generiert Alkyl-, Aryl- und Urethangruppen aufweisende Polycarbonate, die Zugabe von primären oder sekundären Aminen führt zur Einbringung von Urethan- oder Harnstoffgruppen.

Eine nachträgliche Funktionalisierung kann man erhalten, indem das erfindungsgemäße hyperverzweigte Polycarbonat in einem zusätzlichen Verfahrensschritt mit einem geeigneten Funktionalisierungsreagenz, welches mit den OH- und/oder Carbonat- oder Carbamoylchlorid-Gruppen des Polycarbonates reagieren kann, umsetzt.

Hydroxylgruppen enthaltende erfindungsgemäße hyperverzweigte Polycarbonate können zum Beispiel durch Zugabe von Säuregruppen- oder Isocyanatgruppen enthaltenden Molekülen modifiziert werden. Beispielsweise lassen sich Säuregruppen enthaltende Polycarbonate durch Umsetzung mit Anhydridgruppen enthaltenden Verbindungen erhalten. Weiterhin kann man Hydroxylgruppen enthaltende erfindungsgemäße hyperverzweigte Polycarbonate auch durch Umsetzung mit Alkylenoxiden, zum Beispiel Ethylenoxid, Propylenoxid oder Butylenoxid, in hochfunktionelle Polycarbonat-Polyetherpolyole überführen.

Ein weiterer Gegenstand der vorliegenden Erfindung ist ein Verfahren zur Herstellung von erfindungsgemäßen hyperverzweigten Polycarbonaten, im Folgenden auch als erfindungsgemäßes Herstellverfahren bezeichnet. Zur Durchführung des erfindungsgemäßen Herstellverfahren geht man vorzugsweise so vor, dass man

(a) mindestens eine Verbindung mit mindestens drei alkoholischen Hydroxylgruppen pro Molekül mit
(b) mindestens einem Reagenz der allgemeinen Formel I,
(c) mindestens einem Reagenz der allgemeinen Formel $X^3$-$(A^1)_m$-$X^4$
(d) und gegebenenfalls mindestens einer Verbindung mit zwei alkoholischen Hydroxylgruppen pro Molekül

miteinander vermischt und auf eine Temperatur im Bereich von 60 bis 260°C erhitzt, bevorzugt 80 bis 220°C.

Die Umsetzung von Verbindung (a) mit Reagenz (b) und Reagenz (c) kann man in einem Schritt durchführen. Sie kann jedoch auch in zwei Schritten erfolgen, so kann man beispielsweise Verbindung (a) zunächst mit Reagenz (b) umsetzen und dadurch ein hyperverzweigtes Polycarbonat herstellen und danach mit Reagenz (c) funktionalisieren.

Bei der Umsetzung mit Reagenz (b) wird üblicherweise H-$X^1$ und H-$X^2$ abgespalten. Wenn es sich bei H-$X^1$ und/oder H-$X^2$ um Halogenwasserstoff, insbesondere um HCl handelt, so ist es bevorzugt, den oder die abgespaltenen Halogenwasserstoffe durch die Zugabe einer Base, beispielsweise in äquimolaren Mengen, bezogen auf abzuspaltenden Halogenwasserstoff, aus dem Reaktionsgemisch zu entfernen. Geeignete Basen sind beispielsweise Alkalimetallhydroxide oder organische Amine, insbesondere tertiäre Amine wie Triethylamin und Hünigbase (Diisopropylethylamin). Wenn es sich bei H-$X^1$ und H-$X^2$ um Alkohole handelt, so ist es bevorzugt, den oder die abgespaltenen Alkohole H-$X^1$ und H-$X^2$ abzudestillieren, vorzugsweise während der Umsetzung. Das Abdestillieren kann man bei Atmosphärendruck oder auch bei reduziertem Druck durchführen, beispielsweise bei 0,1 bis 950 mbar, insbesondere bei 100 bis 900 mbar. Bevorzugt destilliert man bei Atmosphärendruck ab.

In einer Ausführungsform der vorliegenden Erfindung führt man das erfindungsgemäße Herstellverfahren in Gegenwart eines organischen Lösungsmittels durch, das vorzugsweise aprotisch ist. Beispiele sind Decan, Dodecan, oder Solventnaphtha, weiterhin aromatische Kohlenwasserstoffe wie Toluol, Ethylbenzol, ein oder mehrere isomere Xylole oder chlorierte aromatische Kohlenwasserstoffe wie Chlorbenzol. Geeignet sind weiterhin Ether mit einem hinreichend hohen Siedepunkt, beispielsweise Di-n-Butylether oder 1,4-Dioxan. Weiterhin geeignet sind N,N-Dimethylformamid und N,N-Dimethylacetamid. Bevorzugt ist es jedoch, das erfindungsgemäße Herstellverfahren ohne die Verwendung von Lösungsmitteln durchzuführen.

In einer Ausführungsform der vorliegenden Erfindung führt man das erfindungsgemäße Herstellverfahren in Gegenwart von einem Katalysator oder von Katalysatorgemisch durch. Geeignete Katalysatoren sind Verbindungen, die Veresterungs- oder Umesterungsreaktionen katalysieren, zum Beispiel Alkalihydroxide, Alkalicarbonate, Alkalihydrogencarbonate, vorzugsweise des Natriums, Kaliums oder Cäsiums, oder organische Amine, insbesondere tertiäre Amine, Guanidine, Ammoniumverbindungen, Phosphoniumverbindungen, Aluminium-, Zinn-, Zink, Titan-, Zirkon- oder Wismutorganische Verbindungen, weiterhin sogenannte Doppelmetallcyanid (DMC)-Katalysatoren, wie zum Beispiel in der DE 10138216 oder in der DE 10147712 beschrieben.

Vorzugsweise werden Kaliumhydroxid, Kaliumcarbonat, Kaliumhydrogencarbonat, Natriumhydroxid, Natriumcarbonat, Natriumhydrogencarbonat, 1,4-Di-aza-[2,2,2]-bicyclooctan (DABCO), Diazabicyclononen (DBN), Diazabicycloundecen (DBU), Imidazole wie Imidazol, 1-Methylimidazol oder 1,2-Dimethylimidazol, Titantetra-n-butylat, Titantetraisopropylat, Dibutylzinnoxid, Dibutylzinn-dilaurat, Zinndioctoat, Zirkonacetylacetonat oder Gemische davon eingesetzt.

Man gibt im Allgemeinen in einer Menge von 50 bis 10.000, bevorzugt von 100 bis 5000 Gew.-ppm, Katalysator bzw. Katalysatorgemisch zu, bezogen auf die Menge an eingesetzter Verbindung (a) bzw. der Summe aus (a) und (d).

In einer Ausführungsform der vorliegenden Erfindung erfolgt die Herstellung der erfindungsgemäßen hyperverzweigten Polycarbonate in einem Druckbereich von 0,1 mbar bis 20 bar, bevorzugt bei 1 mbar bis 5 bar.

In einer Ausführungsform der vorliegenden Erfindung führt man das erfindungsgemäße Herstellverfahren in Reaktoren oder Reaktorkaskaden durch, die im Batchbetrieb, halbkontinuierlich oder kontinuierlich betrieben werden, beispielsweise in einem oder mehreren Kesseln.

In einer Ausführungsform der vorliegenden Erfindung setzt man zur Herstellung von erfindungsgemäßem hyperverzweigtem Polycarbonat ein:

10 bis 59 mol-% Verbindung (a), bevorzugt 10 bis 55 und besonders bevorzugt bis 49 mol-% Verbindung (a),
40 bis 60 mol-% Reagenz (b), bevorzugt 45 bis 55 mol-% und besonders bevorzugt 50 mol-% Reagenz (b)
1 bis 50 mol-% Reagenz (c), bevorzugt bis 45 und besonders bevorzugt bis 40 mol-% Reagenz (c),

jeweils bezogen auf die gesamte Reaktionsmischung.

Im Regelfalle beträgt die Menge des oder der eingesetzten Verbindung (d) 0 bis 50 mol-% bezüglich der Verbindung (a), bevorzugt 0 bis 45 mol-%, besonders bevorzugt bis 40 mol-% und ganz besonders bevorzugt 0 bis 30 mol-%.

Durch die vorgenannte Einstellung der Reaktionsbedingungen und gegebenenfalls durch die Wahl des geeigneten Lösemittels können als Rohprodukt anfallende erfindungsgemäße hyperverzweigte Polycarbonate nach der Herstellung ohne weitere Reinigung weiterverarbeitet werden.

In einer weiteren bevorzugten Ausführungsform wird das als Rohprodukt anfallende hyperverzeigte erfindungsgemäße Polycarbonat gestrippt, das heißt, von niedermolekularen, flüchtigen Verbindungen befreit. Dazu kann nach Erreichen des gewünschten Umsatzgrades der Katalysator optional deaktiviert und die niedermolekularen flüchtigen Bestandteile, z.B. Monoalkohole, Phenole, Carbonate, Chlorwasserstoff oder leichtflüchtige oligomere oder cyclische Verbindungen destillativ, gegebenenfalls unter Einleitung eines Gases, vorzugsweise Stickstoff, Kohlendioxid oder Luft, gegebenenfalls bei vermindertem Druck, entfernt werden.

Zum Abbruch der intermolekularen Polykondensationsreaktion des erfindungsgemäßen Herstellverfahrens gibt es verschiedene Möglichkeiten. Beispielsweise kann man die Temperatur auf einen Bereich absenken, in dem die Reaktion zum Stillstand kommt und das erfindungsgemäße hyperverzweigte Polycarbonat lagerstabil ist. In einer anderen Ausführungsform kann man den Katalysator bzw. das Katalysatorgemisch desaktivieren, bei basischen Katalysatoren zum Beispiel durch Zugabe einer sauren Komponente, zum Beispiel einer Lewis-Säure oder einer organischen oder anorganischen Protonensäure.

Weiterhin kann der Abbruch automatisch erfolgen, wenn eine hinreichende Anzahl an terminalen funktionellen Gruppen durch Reaktion mit Reagenz (c) nicht mehr zu einer weiteren Reaktion zur Verfügung steht.

In einer weiteren Ausführungsform kann man, sobald ein erfindungsgemäßes hyperverzweigtes Polycarbonat mit gewünschten Polykondensationsgrad vorliegt, zum Abbruch der Reaktion ein Produkt mit solchen Gruppen zusetzen, die gegenüber erfindungsgemäßem hyperverzweigtem Polycarbonat reaktiv sind. So kann man zum Beispiel ein Mono-, Di- oder Polyamin zugeben oder beispielsweise ein Mono-, Di- oder Polyisocyanat, eine Epoxydgruppen enthaltende Verbindung oder ein mit OH-Gruppen reaktives Säurederivat.

Die gemäß dem erfindungsgemäßen Verfahren erhaltenen hyperverzweigten Polycarbonate können beispielsweise als Haftvermittler, Thixotropiermittel oder als Bausteine zur Herstellung von Polyadditions- oder Polykondensationspolymeren verwendet werden, beispielsweise als Komponenten zur Herstellung von Lacksystemen, Beschichtungen, Überzügen, Klebstoffen, Dichtmassen, Gießelastomeren oder Schaumstoffen.

Ein weiterer Gegenstand der Erfindung ist die Verwendung der erfindungsgemäßen hyperverzweigten Polycarbonate als Haftvermittler, Thixotropiermittel oder als Bausteine zur Herstellung von Polyadditions- oder Polykondensationspolymeren, zum Beispiel von Lacksystemen, Beschichtungen, Überzügen, Klebstoffen, Dichtmassen, Gießelastomeren oder Schaumstoffen.

Gegenstand ist insbesondere die Verwendung von erfindungsgemäßen hyperverzweigten Polycarbonaten zur Herstellung von thermoplastischen Materialien, Druckfarben, wie Flexo-, Tief-, Offset- oder Siebduckfarben. Insbesondere sind die erfindungsgemäβen hyperverzweigten Polycarbonate zur Herstellung von Beschichtungen und Lacksystemen, aber insbesondere auch als Bindemittel, ggf. im Gemisch mit anderen Bindemitteln.

Zu diesem Zweck kann man erfindungsgemäße hyperverzweigte Polycarbonate mit geeigneten Lösemitteln, Farbmitteln, optional weiteren Bindemitteln sowie druckfarben-, lack- oder beschichtungstypischen Zusatzstoffen formulieren. Zu weiteren Einzelheiten zur Formulierung und Herstellung von Druckfarben mit hyperverzweigten Polymeren wird ausdrücklich auf WO 02/36695, sowie WO 02/26697 verwiesen, insbesondere auf die Ausführungen in WO 02/36695, Seite 10, Zeile 19 bis Seite 15, Zeile 14 sowie WO 02/36697, Seite 7, Zeile 14 bis Seite 10, Zeile 18 sowie die in den genannten Schriften aufgeführten Beispiele.

Druckfarben ,Lacke und Beschichtungen, die erfindungsgemäße Polycarbonate enthalten, weisen eine besonders gute Haftung auf den Substraten, insbesondere auf Holz, Metallen und/oder Polymeren auf.

Erfindungsgemäße Druckfarben eignen sich daher auch ganz besonders zur Herstellung von Laminaten aus zwei oder mehreren Polymer- und/oder Metallfolien, bei denen eine Folie mit einer oder mehreren Schichten einer Druckfarbe bedruckt und auf die gedruckte Schicht eine zweite Folie aufkaschiert wird. Derartige Verbunde werden beispielsweise zur Herstellung von Verpackungen eingesetzt.

Weiterhin eignen sich erfindungsgemäße hyperverzweigte Polycarbonate zur Herstellung von Schaumstoffen, insbesondere von Polyurethanschaumstoffen.

Ganz besonders eignen sich erfindungsgemäße hyperverzweigte Polycarbonate zur Herstellung und Stabilisierung von Thermoplasten oder Duroplasten, speziell für thermoplastische Polyurethane, Polyamide, Polyester, Polycarbonate, Polystyrol und Styrolcopolymere, Polyethylene und Polypropylene auf, insbesondere aber auch als Abbruchmittel und ganz besonders zur Herstellung von Polyoxymethylen ("POM"). Ein weiterer Gegenstand der vorliegenden Erfindung ist die Verwendung von erfindungsgemäßen hyperverzweigten Polycarbonaten als Stabilisator für Polyurethane, Polyamide, Polyester, Polycarbonate, Polystyrol und Styrolcopolymere, Polyethylene und Polypropylene und weiterhin als Abbruchmittel zur Herstellung von Polyoxymethylen. Ein weiterer Gegenstand der vorliegenden Erfindung ist ein Verfahren zur Herstellung von Thermoplasten oder Duroplasten und insbesondere Polyoxymethylen unter Verwendung von erfindungsgemäßem hyperverzweigten Polycarbonaten, beispielsweise als Abbruchmittel.

Polyoxymethylenhomo- oder -copolymere (POM) sind als solche bekannt und handelsüblich. Die Polyoxymethylenhomopolymere werden durch Polymerisation von Formaldehyd oder Trioxan hergestellt; bei der Herstellung der Polyoxymethylenpolymere werden außerdem ein oder mehrere Comonomere mitverwendet. Bevorzugt sind die Comonomere ausgewählt aus Formaldehyd, Trioxan und anderen cyclischen oder linearen Formalen (Acetalen von Formaldehyd) bzw. sonstigen Formaldehyd-Quellen. Im Folgenden sollen Polyoxymethylenhomo- und Polyoxymethylencopolymere unter dem Namen POM subsummiert werden.

Ganz allgemein weist POM mindestens 50 mol-% an wiederkehrenden Einheiten $-CH_2O-$ in der Polymerhauptkette auf. Polyoxymethylencopolymere sind bevorzugt, insbesondere solche, die neben den wiederkehrenden Einheiten $-CH_2O-$ noch bis zu 50, vorzugsweise 0,01 bis 20, insbesondere 0,1 bis 10 mol-% und ganz besonders bevorzugt 0,5 bis 6 mol-% an wiederkehrenden Einheiten

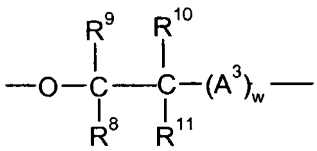

enthalten, wobei $R^8$ bis $R^{11}$ unabhängig voneinander für Wasserstoff, $C_1$-bis $C_4$-Alkyl oder halogensubstituiertes Alkyl mit 1 bis 4 C-Atomen steht und $A^3$ eine $-CH_2-$, $-CH_2O-$, eine $C_1$-$C_4$-Alkyl- oder $C_1$-$C_4$-Halogenalkyl-substituierte Methylengruppe oder eine entsprechende Oxymethylengruppe darstellen und w einen Wert im Bereich von 0 bis 3 hat. Vorteilhafterweise können diese Gruppen durch Ringöffnung von cyclischen Ethern in Polyoxymethylencopolymere eingeführt werden. Bevorzugte cyclische Ether sind solche der Formel

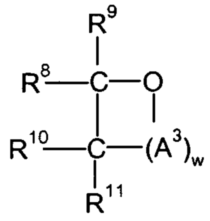

Beispielsweise seien Ethylenoxid, 1,2-Propylenoxid, 1,2-Butylenoxid, 1,3-Butylenoxid, 1,3-Dioxan, 1,3-Dioxolan und 1,3-Dioxepan (= Butandiolformal, BUFO) als cyclische Ether genannt sowie lineare Oligo- oder Polyformale wie Polydioxolan oder Polydioxepan als Comonomere genannt.

Ebenfalls geeignet sind Oxymethylenterpolymerisate, die beispielsweise durch Umsetzung von Trioxan, einem der vorstehend beschriebenen cyclischen Ether mit einem dritten Monomeren, vorzugsweise bifunktionellen Verbindungen der Formel

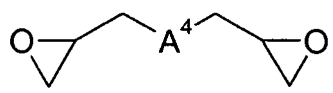

und/oder

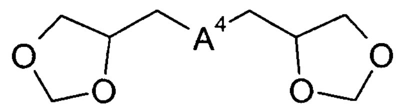

wobei $A^4$ eine Einfachbindung, -O-, -$OA^5O$- ($A^5$ gleich $C_1$- bis $C_8$-Alkylen oder $C_3$- bis $C_8$-Cycloalkylen) ist, hergestellt werden.

Bevorzugte Comonomere der vorgenannten Art sind Ethylendiglycid, Diglycidylether und Diether aus Glycidylen und Formaldehyd, Dioxan oder Trioxan im Molverhältnis 2:1 sowie Diether aus 2 mol Glycidylverbindung und 1 mol eines aliphatischen Diols mit 2 bis 8 C-Atomen wie beispielsweise die Diglycidylether von Ethylenglykol, 1,4-Butandiol, 1,3-Butandiol, Cyclobutan-1,3-diol, 1,2-Propandiol und Cyclohexan-1,4-diol, um nur einige Beispiele zu nennen.

Endgruppenstabilisiertes POM, die an den Kettenenden überwiegend C-C- oder -O-$CH_3$-Bindungen aufweisen, werden besonders bevorzugt.

Bevorzugte Ausführungsformen von POM haben Schmelzpunkte von mindestens 150°C und Molekulargewichte (Gewichtsmittelwert) $M_w$ im Bereich von 5.000 bis 300.000 g/mol, vorzugsweise von 7.000 bis 250.000 g/mol. Insbesondere bevorzugt sind Ausführungsformen von POM mit einer Uneinheitlichkeit ($M_w/M_n$) von 2 bis 15, bevorzugt von 2,5 bis 12, besonders bevorzugt 3 bis 9. Die Messungen erfolgen in der Regel über Gelpermeationschromatographie (GPC) / SEC (size exclusion chromatography), der $M_n$-Wert (Zahlenmittel des Molekulargewichtes) wird im Allgemeinen bestimmt mittels GPC/SEC.

Das Molekulargewicht von POM kann gegebenenfalls durch die bei der Trioxanpolymerisation üblichen Regler, sowie durch die Reaktionstemperatur und -verweilzeit auf die angestrebten Werte eingestellt werden. Als Regler kommen Acetale bzw. Formale einwertiger Alkohole, die entsprechenden Alkohole selbst sowie die als Kettenüberträger fungierenden geringen Mengen Wasser, deren Anwesenheit sich in der Regel nie vollständig vermeiden lässt, in Frage. Regler werden in Mengen von 10 bis 10.000 ppm, vorzugsweise von 20 bis 5.000 ppm, eingesetzt, bezogen auf eingesetztes Trioxan.

Bei Formaldehyd als Monomer kann die Polymerisation anionisch oder kationisch, bei Trioxan als Monomer kann sie kationisch initiiert werden. Bevorzugt initiiert man die Polymerisation kationisch.

Als Initiatoren (auch als Katalysatoren bezeichnet) kann man bei der Trioxanpolymerisation übliche kationische Starter verwenden. Es eignen sich Protonensäuren, wie fluorierte oder chlorierte Alkyl- und Arylsulfonsäuren, z.B. Perchlorsäure, Trifluormethansulfonsäure oder Lewis-Säuren, wie z.B. Zinntetrachlorid, Arsenpentafluorid, Phosphorsäurepentafluorid und Bortrifluorid sowie deren Komplexverbindungen und salzartige Verbindungen, z.B. Bortrifluorid-Etherate und Triphenylmethylenhexafluorophosphat. Initiatoren werden in Mengen von etwa 0,01 bis 1.000 ppm, vorzugsweise 0,01 bis 500 ppm und insbesondere von 0,01 bis 200 ppm eingesetzt, bezogen auf eingesetztes Trioxan. Im

allgemeinen empfiehlt es sich, Initiator in verdünnter Form zuzusetzen, vorzugsweise in Konzentrationen von 0,005 bis 5 Gew.-%. Als Verdünnungsmittel hierfür können inerte Verbindungen wie aliphatische oder cycloaliphatische Kohlenwasserstoffe z.B. Cyclohexan, halogenierte aliphatische Kohlenwasserstoffe, Glykolether, cyklische Carbonate, Lactone usw. verwendet werden. Besonders bevorzugte Lösungsmittel sind Triglyme (Triethylenglykoldimethylether), 1,4-Dioxan, 1,3-Dioxolan, Propylencarbonat oder γ-Butyrolacton.

Zusätzlich zu Initiatoren können Cokatalysatoren mitverwendet werden. Beispiele für Cokatalysatoren sind Alkohole jeglicher Art, z.B. aliphatische Alkohole mit 2 bis 20 C-Atomen, wie tert.-Amylalkohol, Methanol, Ethanol, n-Propanol, n-Butanol, n-Pentanol, n- Hexanol, aromatische Alkohole mit 6 bis 30 C-Atomen wie beispielsweise Hydrochinon, halogenierte Alkohole mit 2 bis 20 C-Atomen, wie Hexafluorisopropanol; ganz besonders bevorzugt sind Glykole jeder Art, insbesondere Diethylenglykol und Triethylenglykol; und aliphatische Dihydroxyverbindungen, insbesondere Diole mit 2 bis 6 Kohlenstoffatomen wie 1,2-Ethandiol, 1,3-Propandiol, 1,4-Butandiol, 1,6-Hexandiol, 1,4-Hexandiol, 1,4-Cyclohexandiol, 1,4-Cyclohexandimethanol und Neopentylglykol. Monomere, Initiatoren, Cokatalysator und gegebenenfalls Regler können auf beliebige Weise vorgemischt oder auch getrennt voneinander dem Polymerisationsreaktor zugegeben werden.

Ferner können die Komponenten Stabilisator enthalten, beispielsweise sterisch gehinderte Phenole, wie in EP-A 0 129 369 oder EP-A 0 128 739 beschrieben.

Vorzugsweise wird direkt anschließend an die Polymerisation die Polymerisationsmischung desaktiviert, vorzugsweise ohne dass eine Phasenveränderung erfolgt. Die Desaktivierung der Initiatorreste (Katalysatorreste) erfolgt durch Zugabe von einem oder mehreren Desaktivatoren (Abbruchmitteln) zur Polymerisationsschmelze. Erfindungsgemäß verwendet man ein oder mehrere erfindungsgemäße hyperverzweigte Polycarbonate als Abbruchmittel.

POM aus Formaldehyd sind in an sich üblicher Weise durch Polymerisation in der Gasphase, in Lösung, durch Fällungspolymerisation oder in Masse (Substanz) herstellbar. POM aus Trioxan werden in der Regel durch Polymerisation in Masse erhalten, wozu man jegliche Reaktoren mit hoher Mischwirkung verwenden kann. Die Reaktionsführung kann dabei homogen erfolgen, z.B. in einer Schmelze, oder heterogen, z.B. als Polymerisation zu einem Feststoff oder Feststoffgranulat. Geeignet sind beispielsweise Schalenreaktoren, Pflugscharmischer, Rohrreaktoren, Listreaktoren, Kneter (z.B. Busskneter), Extruder mit beispielsweise einer oder zwei Schnecken, und Rührreaktoren, wobei die Reaktoren statische oder dynamische Mischer aufweisen können.

Bei einer Polymerisation in Masse, z.B. in einem Extruder, kann durch aufgeschmolzenes POM eine sog. Schmelzeabdichtung zum Extrudereinzug hin erzeugt werden, wodurch flüchtige Bestandteile im Extruder verbleiben. Man dosiert die vorstehenden Monomere in die im Extruder vorhandene Polymerschmelze, gemeinsam oder getrennt von den Initiatoren (Katalysatoren), bei einer bevorzugten Temperatur der Reaktionsmischung von 62 bis 114°C. Bevorzugt werden auch die Monomere (Trioxan) in geschmolzenem Zustand dosiert, z.B. bei 60 bis 120°C.

Die Schmelzepolymerisation erfolgt in der Regel bei 1,5 bis 500 bar und 130 bis 300°C, und die Verweilzeit der Polymerisationsmischung im Reaktor beträgt üblicherweise 0,1 bis 20, bevorzugt 0,4 bis 5 min. Vorzugsweise führt man die Polymerisation bis zu einem Umsatz über 30 %, z.B. 60 bis 90 %.

Man erhält in jedem Falle ein Roh-POM, das wie erwähnt erhebliche Anteile, beispielsweise bis zu 40 Gew.-%, an nicht umgesetzten Restmonomeren enthält, insbesondere Trioxan und Formaldehyd. Dabei kann Formaldehyd im Roh-POM auch dann vorliegen, wenn nur Trioxan als Monomer eingesetzt wurde, da es als Abbauprodukt des Trioxans entstehen kann. Außerdem können auch andere Oligomere des Formaldehyds vorliegen, z.B. das tetramere Tetroxan.

Bevorzugt wird zur Herstellung des POM Trioxan als Monomer eingesetzt, weshalb auch die Restmonomere Trioxan enthalten, außerdem üblicherweise noch 0,5 bis 10 Gew.-% Tetroxan und 0,1 bis 75 Gew.-% Formaldehyd.

Das Roh-POM wird üblicherweise in einer Entgasungsvorrichtung entgast. Als Entgasungsvorrichtungen eignen sich Entgasungstöpfe (Flash-Töpfe), Entgasungsextruder mit einer oder mehreren Schnecken, Filmtruder, Dünnschichtverdampfer, Sprühtrockner, Strangentgaser und andere übliche Entgasungsvorrichtungen. Bevorzugt verwendet man Entgasungsextruder oder Entgasungstöpfe. Letztere sind besonders bevorzugt.

Die Entgasung kann einstufig (in einer einzigen Entgasungsvorrichtung) erfolgen. Ebenso kann sie mehrstufig - beispielsweise zweistufig - in mehreren, in Art und Größe gleichen oder verschiedenn Entgasungsvorrichtungen erfolgen. Bevorzugt verwendet man zwei verschiedene Entgasungstöpfe hintereinander, wobei der zweite Topf ein kleineres Volumen aufweisen kann.

Bei einer einstufigen Entgasung liegt der Druck in der Entgasungsvorrichtung üblicherweise bei 0,1 mbar bis 10 bar, bevorzugt 5 mbar bis 800 mbar, und die Temperatur in der Regel bei 100 bis 260, insbesondere 150 bis 210°C. Bei einer zweistufigen Entgasung beträgt der Druck in der ersten Stufe bevorzugt 0,1 mbar bis 10 bar, bevorzugt 1 mbar bis 7 bar, und in der zweiten Stufe bevorzugt 0,1 mbar bis 5 bar, bevorzugt 1 mbar bis 1,5 bar. Die Temperatur unterscheidet sich bei einer zweistufigen Entgasung in der Regel nicht wesentlich von den für die einstufige Entgasung genannten Temperaturen.

Die Temperierung des POM bei der Entgasung kann in an sich bekannter Weise durch Wärmetauscher, Doppelmantel, temperierte statische Mischer, innenliegende Wärmetauscher oder andere geeignete Vorrichtungen erfolgen.

Die Einstellung des Entgasungsdrucks nimmt man ebenfalls in an sich bekannter Weise vor, z.B. mittels Druckregelventilen. Das POM kann in der Entgasungsvorrichtung schmelzflüssig oder fest vorliegen.

Die Verweilzeit des Polymeren in der Entgasungsvorrichtung beträgt in der Regel 0,1 sec bis 30 min, bevorzugt 0,1 sec bis 20 min. Bei einer mehrstufigen Entgasung beziehen sich diese Zeiten auf jeweils eine einzige Stufe.

Das entgaste POM wird in der Regel mit Pumpen, Extrudern oder anderen üblichen Förderorganen aus der Entgasungsvorrichtung abgezogen.

Die bei der Entgasung freiwerdenden Restmonomere werden als Brüdenstrom abgetrennt. Unabhängig von der Ausgestaltung der Entgasung (ein- oder mehrstufig, Entgasungstöpfe oder-extruder, etc.) sind die Restmonomere üblicherweise ausgewählt aus Trioxan, Formaldehyd, Tetroxan, 1,3-Dioxolan; 1,3-Dioxepan, Ethylenoxid und Oligomeren des Formaldehyds.

Die abgetrennten Restmonomere (Brüdenstrom) werden in üblicher Weise abgezogen. Sie können kondensiert und vorzugsweise in die Polymerisation zurückgeführt werden. Das Mengenverhältnis von Trioxan und Formaldehyd im Brüdenstrom kann durch Einstellung entsprechender Drucke und Temperaturen variiert werden.

Das entgaste Polymer, also die mit dem erfindungsgemäßen Verfahren erhältlichen Polyoxymethylenhomo- und -copolymere, können mit üblichen Zusatzstoffen versehen werden. Solche Zusatzstoffe sind beispielsweise

- Talkum,
- Polyamide, insbesondere Mischpolyamide,
- Erdalkalisilikate und Erdalkaliglycerophosphate,
- Ester oder Amide gesättigter aliphatischer Carbonsäuren,
- Ether, die sich von Alkoholen und Ethylenoxid ableiten,
- unpolare Polypropylenwachse,
- Nukleierungsmittel,
- Füllstoffe,
- schlagzäh modifizierende Polymere, insbesondere solche auf Basis von Ethylen-Propylen (EPM)- oder Ethylen-Propylen-Dien (EPDM)-Kautschuken,
- Flammschutzmittel,
- Weichmacher,
- Haftvermittler,
- Farbstoffe und Pigmente,
- Formaldehyd-Fänger, insbesondere aminsubstituierte Triazinverbindungen, Zeolithe oder Polyethylenimine
- Antioxidantien, insbesondere solche mit phenolischer Struktur, Benzophenonderivate, Benzotriazolderivate, Acrylate, Benzoate, Oxanilide und sterisch gehinderte Amine (HALS = hindered amine light stabilizers).

Die vorstehend genannten Zusatzstoffe sind als Zusatz zu POM an sich bekannt und beispielsweise in Gächter/Müller, Plastics Additives Handbook, Hanser Verlag München, 4. Auflage1993, Reprint 1996 beschrieben.

Die Menge der Zusatzstoffe hängt vom verwendeten Zusatzstoff und der gewünschten Wirkung ab. Dem Fachmann sind die üblichen Mengen bekannt. Die Zusatzstoffe werden, falls mitverwendet, in üblicher Weise zugefügt, beispielsweise einzeln oder gemeinsam, als solche, als Lösung bzw. Suspension oder bevorzugt als Masterbatch.

Man kann die fertige POM-Formmasse in einem einzigen Schritt herstellen, indem z.B. man das POM und die Zusatzstoffe in einem Extruder, Kneter, Mischer oder einer anderen geeigneten Mischvorrichtung unter Aufschmelzen des POM vermischt, die Mischung austrägt und anschließend granuliert.

Jedoch hat es sich als vorteilhaft erwiesen, einige oder alle der Komponenten zunächst in einem Trockenmischer oder einem anderen Mischapparat "kalt" vorzumischen und die erhaltene Mischung in einem zweiten Schritt unter Aufschmelzen des POM - ggf. unter Zugabe weiterer Komponenten - in einem Extruder oder sonstigen Mischvorrichtung zu homogenisieren. Insbesondere kann es vorteilhaft sein, zumindest das POM und das Antioxidans (falls mitverwendet) vorzumischen.

Die Mischvorrichtung, z.B. der Extruder, kann mit Entgasungsvorrichtungen versehen sein, beispielsweise um Restmonomere oder sonstige flüchtige Bestandteile auf einfache Weise zu entfernen. Die homogenisierte Mischung wird wie üblich ausgetragen und vorzugsweise granuliert.

Um die Verweilzeit des entgasten POM zwischen Entgasungsvorrichtung und Mischvorrichtung zu minimieren, kann mindestens eine, insbesondere die einzige oder die letzte Entgasungsvorrichtung unmittelbar an einer Mischvorrichtung montiert sein. Besonders bevorzugt fällt der Austrag aus der Entgasungsvorrichtung mit dem Eintrag in die Mischvorrichtung zusammen. Beispielsweise kann man einen Entgasungstopf verwenden, der keinen Boden aufweist und der unmittelbar auf den Eintragsdom eines Extruders montiert ist. Dadurch stellt der Extruder den Boden des Entgasungstopfes und ist zugleich dessen Austragsvorrichtung.

Durch die Verwendung von erfindungsgemäßem hyperverzweigtem Polycarbonat kann man auf einfache Weise Polyoxymethylen herstellen, insbesondere dann, wenn man die Restmonomeren vollständig oder teilweise rückzuführen

wünscht. Insbesondere kann man abgetrennte Restmonomere ohne Aufreinigung unmittelbar in die Polymerisation zurückgeführt, ohne dass es zu Beeinträchtigungen der Polymerisation kommt.

Die vorliegende Erfindung soll anhand der nachfolgenden Arbeitsbeispiele näher erläutert werden.

Arbeitsbeispiele:

Allgemeine Vorbemerkungen:

Der abdestillierte Alkohol wurde in einem gekühlten Rundkolben gesammelt, ausgewogen und der Umsatz so gegenüber dem theoretisch möglichen Umsatz prozentual ermittelt.

Die Reaktionsprodukte wurden per Gelpermeationschromatographie analysiert, Laufmittel war N,N-Dimethylacetamid, als Standard wurde Polymethylmethacrylat (PMMA) verwendet.

Bei der Viskosität handelt es sich jeweils um die dynamische Viskosität, bestimmt bei 23°C nach DIN 53019.

I. Herstellung von erfindungsgemäßen hyperverzweigten Polycarbonaten

I.1 Herstellung von erfindungsgemäßem hyperverzweigtem Polycarbonat PC.1

216 g des Triols (a.1) (1,1,1-Trimethylolpropan, verethert mit einem Mol Ethylenoxid pro Mol Hydroxylgruppen), 34,3 g 1,2,2,6,6-Pentamethylpiperidin-4-ol (c.1) und 118,1g Diethylcarbonat (b.1) wurden in einem Dreihalskolben, ausgestattet mit Rührer, Rückflusskühler und Innenthermometer, vorgelegt, dann 0,1 g Kaliumcarbonat zugesetzt, die Mischung unter Rühren auf 140°C erwärmt und 2,5 h bei 140°C gerührt. Mit fortschreitender Reaktionsdauer verringerte sich dabei die Temperatur des Reaktionsgemisches - bedingt durch die einsetzende Siedekühlung des freigesetzten Ethanols - langsam bis auf etwa 115°C. Nun wurde der Rückflusskühler gegen einen absteigenden Kühler getauscht, Ethanol abdestilliert und die Temperatur des Reaktionsgemisches langsam bis auf 200°C erhöht. Das abdestillierte Ethanol (75 g = 80 mol-% bezogen auf vollständigen Umsatz) wurde in einem gekühlten Rundkolben gesammelt. Anschließend wurde die Reaktionsmischung auf Raumtemperatur abgekühlt und durch Gelpermeationschromatographie analysiert. Das zahlenmittlere Molekulargewicht $M_n$ von erfindungsgemäßem hyperverzweigtem Polycarbonat PC.1 betrug 1100 g/mol und das gewichtsmittlere Molekulargewicht $M_w$ betrug 2500 g/mol. Viskosität: 1200 mPa·s.

I.2 Herstellung von erfindungsgemäßem hyperverzweigtem Polycarbonat PC.2

162 g des Triols (a.1), 68,5 g 1,2,2,6,6-Pentamethylpiperidin-4-ol (c.1) und 118,1 g Diethylcarbonat (b.1) wurden in einem Dreihalskolben, ausgestattet mit Rührer, Rückflusskühler und Innenthermometer, vorgelegt, dann 0,1 g Kaliumcarbonat zugesetzt, die Mischung unter Rühren auf 140°C erwärmt und 3,5 h bei dieser Temperatur gerührt. Mit fortschreitender Reaktionsdauer verringerte sich dabei die Temperatur des Reaktionsgemisches - bedingt durch die einsetzende Siedekühlung des freigesetzten Ethanols - langsam bis auf etwa 115°C. Nun wurde der Rückflusskühler gegen einen absteigenden Kühler getauscht, Ethanol abdestilliert und die Temperatur des Reaktionsgemisches langsam bis auf 200°C erhöht. Das abdestillierte Ethanol (72 g = 78 mol-% bezogen auf vollständigen Umsatz) wurde in einem gekühlten Rundkolben gesammelt. Anschließend wurde die Reaktionsmischung auf Raumtemperatur abgekühlt und durch Gelpermeationschromatographie analysiert. Das zahlenmittlere Molekulargewicht $M_n$ von erfindungsgemäßem hyperverzweigtem Polycarbonat PC.2 betrug 400 g/mol und das gewichtsmittlere Molekulargewicht $M_w$ betrug 1100 g/mol. Viskosität: 1050 mPa·s.

I.3 Herstellung von erfindungsgemäßem hyperverzweigtem Polycarbonat PC.3 216 g des Triols (a.1), 31,5 g 2,2,6,6-Tetramethylpiperidin-4-ol (c.2) und 118,1g Diethylcarbonat (b.1) wurden in einem Dreihalskolben, ausgestattet mit Rührer, Rückflusskühler und Innenthermometer, vorgelegt, dann 0,1 g Kaliumcarbonat zugesetzt, die Mischung unter Rühren auf 140°C erwärmt und 3,5 h bei dieser Temperatur gerührt. Mit fortschreitender Reaktionsdauer verringerte sich dabei die Temperatur des Reaktionsgemisches - bedingt durch die einsetzende Siedekühlung des freigesetzten Ethanols - langsam bis auf etwa 115°C. Nun wurde der Rückflusskühler gegen einen absteigenden Kühler getauscht, Ethanol abdestilliert und die Temperatur des Reaktionsgemisches langsam bis auf 200°C erhöht. Das abdestillierte Ethanol (82 g = 89 mol-% bezogen auf vollständigen Umsatz) wurde in einem gekühlten Rundkolben gesammelt. Anschließend wurde die Reaktionsmischung auf Raumtemperatur abgekühlt und durch Gelpermeationschromatographie analysiert. Das zahlenmittlere Molekulargewicht $M_n$, von erfindungsgemäßem hyperverzweigtem Polycarbonat PC.3 betrug 1500 g/mol und das gewichtsmittlere Molekulargewicht $M_w$ betrug 3200 g/mol. Viskosität: 3200 mPa·s.

I.4 Herstellung von erfindungsgemäßem hyperverzweigtem Polycarbonat PC.4 162 g des Triols (a.1), 50,1 g 1-(3-Aminopropyl)imidazol (c.3)

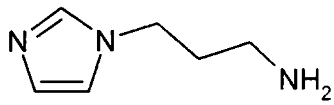

(c.3)

und 118,1g Diethylcarbonat (b.1) wurden in einem Dreihalskolben, ausgestattet mit Rührer, Rückflusskühler und Innenthermometer, vorgelegt, dann 0,1 g Kaliumcarbonat zugesetzt, die Mischung unter Rühren auf 140°C erwärmt und 3,5 h bei dieser Temperatur gerührt. Mit fortschreitender Reaktionsdauer verringerte sich dabei die Temperatur des Reaktionsgemisches - bedingt durch die einsetzende Siedekühlung des freigesetzten Ethanols - langsam bis auf etwa 115°C. Nun wurde der Rückflusskühler gegen einen absteigenden Kühler getauscht, Ethanol abdestilliert und die Temperatur des Reaktionsgemisches langsam bis auf 200°C erhöht. Das abdestillierte Ethanol (75 g = 80 bezogen auf vollständigen Umsatz) wurde in einem gekühlten Rundkolben gesammelt. Anschließend wurde die Reaktionsmischung auf Raumtemperatur abgekühlt und durch Gelpermeationschromatographie analysiert. Das zahlenmittlere Molekulargewicht $M_n$ von erfindungsgemäßem hyperverzweigtem Polycarbonat PC.4 betrug 950 g/mol und das gewichtsmittlere Molekulargewicht $M_w$ betrug 1900 g/mol. Viskosität: 12.100 mPa·s.

I.5 Herstellung von erfindungsgemäßem hyperverzweigtem Polycarbonat PC.5

108 g des Triols (a.1), 17,2g 4-Hydroxy-2,2,6,6-Tetramethylpiperidin-1-oxyl (TEMPOL) (c.4) und 59,1 g Diethylcarbonat (b.1) wurden in einem Dreihalskolben, ausgestattet mit Rührer, Rückflusskühler und Innenthermometer, vorgelegt, dann 0,1 g Kaliumhydroxid zugesetzt, die Mischung unter Rühren auf 140°C erwärmt und 3,5 h bei dieser Temperatur gerührt. Mit fortschreitender Reaktionsdauer verringerte sich dabei die Temperatur des Reaktionsgemisches - bedingt durch die einsetzende Siedekühlung des freigesetzten Ethanols - langsam bis auf etwa 115°C. Nun wurde der Rückflusskühler gegen einen absteigenden Kühler getauscht, Ethanol abdestilliert und die Temperatur des Reaktionsgemisches langsam bis auf 200°C erhöht. Das abdestillierte Ethanol (38 g = 82 mol-% bezogen auf vollständigen Umsatz) wurde in einem gekühlten Rundkolben gesammelt. Anschließend wurde die Reaktionsmischung auf Raumtemperatur abgekühlt und PC.5 durch Gelpermeationschromatographie analysiert. Das zahlenmittlere Molekulargewicht $M_n$ betrug 2100 g/mol und das gewichtsmittlere Molekulargewicht $M_w$ betrug 5700 g/mol. Die Viskosität betrug 15.400 mPas bei 23°C.

I.6 Herstellung von erfindungsgemäßem hyperverzweigtem Polycarbonat PC.6

270 g des Triols (a.1) und 118,3 g Diethylcarbonat (b.1) wurden in einem Dreihalskolben, ausgestattet mit Rührer, Rückflusskühler und Innenthermometer, vorgelegt, dann 0,1 g Kaliumcarbonat zugesetzt, die Mischung unter Rühren auf 140°C erwärmt und 3,5 h bei dieser Temperatur gerührt. Mit fortschreitender Reaktionsdauer verringerte sich dabei die Temperatur des Reaktionsgemisches - bedingt durch die einsetzende Siedekühlung des freigesetzten Ethanols - langsam bis auf etwa 115°C. Nun wurde der Rückflusskühler gegen einen absteigenden Kühler getauscht, Ethanol abdestilliert und die Temperatur des Reaktionsgemisches langsam bis auf 200°C erhöht. Das abdestillierte Ethanol (64 g = 70 mol-% bezogen auf vollständigen Umsatz) wurde in einem gekühlten Rundkolben gesammelt. Das Produkt wurde nun auf 140°C abgekühlt, mit 0,1 g 85%iger Phosphorsäure versetzt und 10 min bei 140°C und einem Druck von 40 mbar entmonomerisiert. Anschließend wurde die Reaktionsmischung auf Raumtemperatur abgekühlt und das so erhältliche hyperverzweigte Polycarbonat durch Gelpermeationschromatographie analysiert. Das zahlenmittlere Molekulargewicht $M_n$ betrug 1300 g/mol und das gewichtsmittlere Molekulargewicht $M_w$ betrug 2300 g/mol. Die OH-Zahl des Polymeren, bestimmt nach DIN 53240, Teil 2 betrug 300 mg KOH/g.

33,5 g des wie vorstehend beschrieben erhaltenen hyperverzweigten Polycarbonats wurden in einem Dreihalskolben, ausgestattet mit Rührer, Rückflusskühler und Innenthermometer, vorgelegt, mit 34,8 g 3-(3,5-Di-tert.butyl-4-hydroxyphenyl)propionsäure (c.5) und 0,05 g Dibutylzinn-dilaurat versetzt und unter Rühren auf 180°C erhitzt und 8 h gerührt, wobei geringe Mengen an Wasser über den absteigenden Kühler abgetrennt wurden. Anschließend wurde PC.6 auf Raumtemperatur abgekühlt und durch Gelpermeationschromatographie analysiert. Das zahlenmittlere Molekulargewicht $M_n$ betrug 1300 g/mol und das gewichtsmittlere Molekulargewicht $M_w$ betrug 2200 g/mol. Die OH-Zahl betrug 98 mg KOH/g, die Viskosität bei 23°C lag bei 85.000 mPas.

II. Anwendungsexperimente: Erfindungsgemäße Polycarbonate als Abbruchmittel für POM

II.1 Herstellung von Polyoxymethylen (POM)

Allgemeine Vorschrift:

Eine Monomermischung bestehend aus 95 Gew.-% Trioxan, 3 Gew.-% Dioxolan und 0,005 Gew.-% Methylal wurde mit einem Volumenstrom von 5 kg/h kontinuierlich in einen Polymerisationsreaktor dosiert. Der Reaktor war ein mit statischen Mischern versehener Rohrreaktor und wurde bei 150°C und 30 bar betrieben.

Als Initiator wurde 0,1 Gew.-ppm Perchlorsäure in den Monomerstrom eingemischt, wozu eine 0,01 Gew.-% Lösung von 70 Gew.-% wässriger Perchlorsäure in γ-Butyrolacton verwendet wurde. Nach einer Polymerisationszeit (Verweilzeit) von 2 min wurde erfindungsgemäßes hyperverzweigtes Polycarbonat gemäß Tabelle 1 als 0,1 Gew.-% Lösung in 1,3-Dioxolan in die Polymerschmelze dosiert und eingemischt, sodass erfindungsgemäßes hyperverzweigtes Polycarbonat in 10-fachem molarem Überschuss der Piperidin-Endgruppen (PC.1 bis PC.3) bzw. Imidazol-Endgruppen (PC.4) zum Initiator vorlag. Die Verweilzeit in der Desaktivierungszone betrug 3 min.

Die Polymerschmelze wurde durch eine Rohrleitung abgezogen und über ein Regelventil in einen ersten Entgasungstopf entspannt, der mit einer Abgasleitung versehen war. Die Temperatur des Entgasungstopfs betrug 190°C und der Druck war 3,5 bar.

Aus dem ersten Entgasungstopf wurden die Brüden durch die Abgasleitung in einen Fallfilmkondensator abgezogen und dort bei 118°C und 3,5 bar mit einem Zulauf aus frischem Trioxan in Kontakt gebracht. Teile des Brüdens wurden hierbei im frischen Trioxan niedergeschlagen; die erhaltene Mischung wurde anschließend zum Polymerisationsreaktor geführt. Der nicht im Frisch-Trioxan niedergeschlagene Brüden wurde durch ein Druckhalteventil, das den Druck im Fallfilmkondensator regelte, einer Abgasleitung zugeführt.

Die Polymerschmelze wurde aus dem ersten Entgasungstopf durch eine Rohrleitung abgezogen und über ein Regelventil in einen zweiten Entgasungstopf entspannt, der mit einer Abgasleitung versehen war. Die Temperatur des zweiten Entgasungstopfs betrug 190°C und der Druck war Umgebungsdruck. Der zweite Entgasungstopf wies keinen Boden auf und war unmittelbar auf den Zufuhrdom eines Zweischneckenextruders ZSK 30 von Werner & Pfleiderer montiert, so dass das entgaste Polymer aus dem Topf direkt auf die Extruderschnecken fiel.

Der Extruder wurde bei 190°C und mit einer Schneckendrehzahl von 150 Upm betrieben und war mit Entgasungsöffnungen versehen, die bei 250 mbar betrieben wurden. Außerdem wies er eine Zufuhröffnung für Zusatzstoffe auf, durch die 0,5 kg/h des Antioxidans Irganox® 245 zudosiert wurden. Das Produkt wurde in üblicher Weise ausgetragen, abgekühlt und granuliert.

Am erhaltenen Granulat wurde die Schmelzevolumenrate (MVR) nach ISO 1133 bei 190°C Schmelzetemperatur und 2,16 kg Nennlast bestimmt.

Antioxidans Irganox® 245 von Fa. Ciba, eine Verbindung der Formel

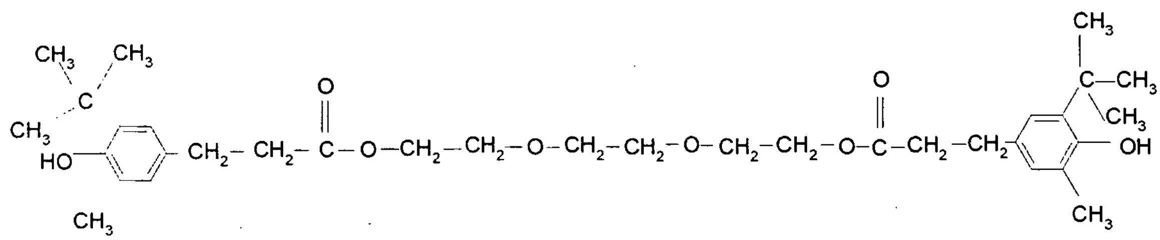

II.2 Vergleichsexperimente

Für die Vergleichsexperimente wurde jeweils die entsprechende Menge an Vergleichsdesaktivator V-DA.1 bis V-DA.4 genommen.

V-DA.1: 4-Amino-2,2,6,6-tetramethylpiperidin,

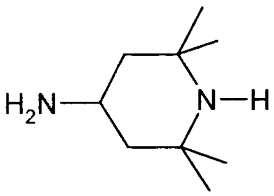

V-DA.2:

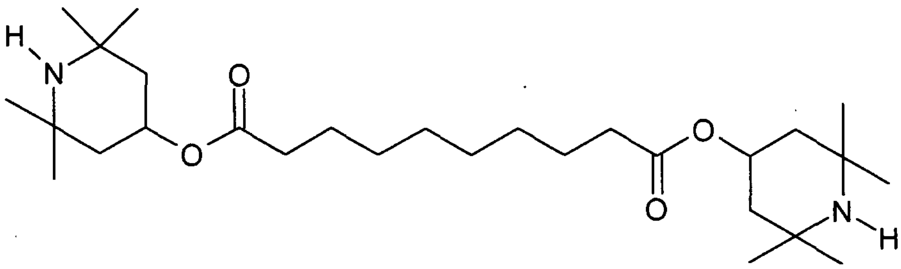

V-DA.2

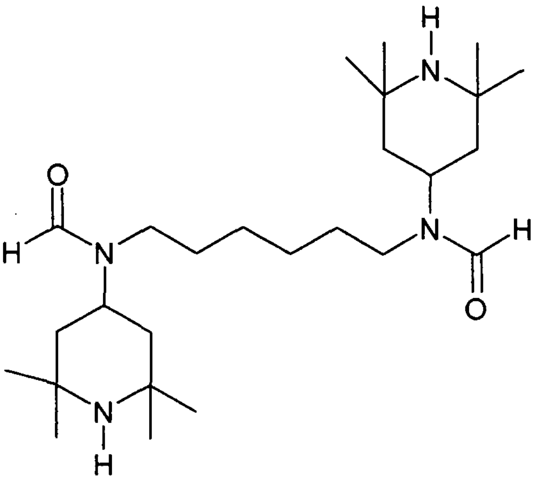

V-DA.3

V-DA.4: 4-Aminopyridin

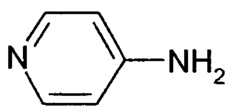

Es wurde vorgegangen wie unter II.1 beschrieben, jedoch wurde anstelle eines erfindungsgemäßen hyperverzweigten Polycarbonats einer der Vergleichs-Desaktivatoren V-DA.1 bis V-DA.4 als 0,1 Gew.-% Lösung in 1,3-Dioxolan in die Polymerschmelze dosiert und eingemischt, so dass die Verbindung V in 10-fachem molaren Überschuss zum Initiator vorlag.

Als der Brüden aus dem ersten Entgasungstopf im Fallfilmkondensator mit dem Trioxan-Zulauf kontaktiert wurde und diese Mischung in den Polymerisationsreaktor geführt wurde, brach die Reaktion ein. Es konnte kein granulierbares Produkt erhalten werden.

Tabelle 1 fasst die Ergebnisse zusammen.

Tabelle 1: Ergebnisse der Herstellung von POM

| Beispiel | Desaktivator | Schmelzevolumenrate MVR (190°C, 2,16 kg) [$cm^3$/10 min] |
|---|---|---|
| 1 | PC.1 | 18,5 |
| 2 | PC.2 | 17 |
| 3 | PC.3 | 16 |
| 4 | PC.4 | 7 |
| V-5 | V-DA.1 | kein Produkt erhalten |
| V-6 | V-DA.2 | kein Produkt erhalten |
| V-7 | V-DA.3 | kein Produkt erhalten |
| V-8 | V-DA.4 | kein Produkt erhalten |

III. Anwendungsexperimente: erfindungsgemäße Polymere als Stabilisatoren in Lacksystemen

III.1. Rohstoffe zur Herstellung von Lacksystemen (erfindungsgemäß und Vergleichs-Lacksystemen)

Es wurden die folgenden Lackkomponenten eingesetzt:

Polyacrylatpolyol: Polyacrylatpolyol mit einer OH-Zahl von ca. 100 mg KOH/g und einer Viskosität von 700 - 1000 mPas, 60 Gew.-% Lösung in Xylol/n-Butylacetat, kommerziell erhältlich als Macrynal® SM 600, Firma Cytec.
Polyisocyanat: trimeres Hexamethylendiisocyanat, 100%-ig; NCO-Gehalt: 22%; Viskosität ca. 3000 mPa·s.
MPA: Methoxypropylacetat, Lösungsmittel.
BAC: n-Butylacetat, Lösungsmittel.
Byk 300: Verlaufshilfsmittel, Firma BYK.
Baysilonöl OL, 10% in BAC: Verlaufsadditiv, Firma Borchers.
Tinuvin 384-2: 95 % Benzolpropionsäure, Gemisch aus Esten von verzweigten und linearen Carbonsäureesten von 3-(2H-Benzotriazol-2-yl)-5-(1,1-dimethylethyl)-4-hydroxy-, 5 % 1-Methoxy-2-propylacetat, UV-Absorber, Firma Ciba Speciality Chemical Inc.
Tinuvin 292 HP: HALS-Derivat, Mischung aus Bis(1,2,2,6,6-Pentamethyl-4-Piperidinyl)sebacat und Methyl (1,2,2,6,6-Pentamethyl-4-Piperidinyl)sebacat, ca.100 %-ig, Firma Ciba Speciality Chemical Inc.
Butoxyl: 3- Methoxybutylacetat,
BGA: n-Butylglykolacetat,
Dipenten: Lösungsmittel, Firma Fluka
Solvesso 100: Lösungsmittel, Firma Exxon MobileChemical

III.2. Herstellung von erfindungsgemäßen Lacksystemen

Die Lackkomponenten wurden bezogen auf Isocyanat- und Hydroxylgruppen stöchiometrisch gemischt, dass heißt das Verhältnis von NCO : OH-Gruppen war äquimolar (Index 100).

Die erfindungsgemäßen Polymere PC.1 bis PC.3 wurden als 50 Gew.-% Lösung in n-Butylacetat eingesetzt.

Die Komponenten des jeweiligen erfindungsgemäßen Lacksystems (siehe Tabelle 2) wurden miteinander in einem Twist-off-Glas unter Rühren mit einem Spatel unter Zugabe der Spritzverdünnung (s. Tabelle 3) vermischt, bis eine Spritzviskosität von 18 Sekunden Auslaufzeit, gemessen mit dem DIN 4-Becher nach DIN 53211, erreicht war.

Tabelle 2: Zusammensetzung der Lacksysteme L.1 (Vergleichsversuch) und L.2 bis L.7 (erfindungsgemäß), Angaben in Gew.-Teilen:

| Rohstoffe | Nullprobe | L.1 | L.2 | L.3 | L.4 | L.5 | L.6 | L.7 |
|---|---|---|---|---|---|---|---|---|
| Polyacrylatpolyol | 87 | 87 | 87 | 87 | 87 | 87 | 87 | 87 |
| Polyisocyanat | 17,79 | 18 | 17,8 | 17,8 | 17,8 | 17,8 | 17,79 | 17,79 |
| MPA | 5 | 5 | 5 | 5 | 5 | 5 | 5 | 5 |

(fortgesetzt)

| Rohstoffe | Nullprobe | L.1 | L.2 | L.3 | L.4 | L.5 | L.6 | L.7 |
|---|---|---|---|---|---|---|---|---|
| BAC | 5,26 | 5,3 | 5,26 | 5,26 | 5,26 | 5,26 | 5,26 | 5,26 |
| Byk 300 | 0,3 | 0,3 | 0,3 | 0,3 | 0,3 | 0,3 | 0,3 | 0,3 |
| Baysilonöl OL | 1 | 1 | 1 | 1 | 1 | 1 | 1 | 1 |
| Tinuvin 384-2 | - | 0,7 | 0,74 | 0,74 | 0,74 | 0,74 | 0,74 | 0,74 |
| Tinuvin 292 HP | - | 0,7 | | | | | | |
| PC.1 | - | | 1,4 | | | 2,8 | | |
| PC.2 | - | | | 1,4 | | | 2,8 | |
| PC.3 | - | | | | 1,4 | | | 2,8 |
| Spritzverdünnung | Bis zur Spritzviskosität von 18 Sekunden | | | | | | | |

Tabelle 3: Zusammensetzung der Spritzverdünnung (Angabe in Gew.-Teilen):

| | |
|---|---|
| 7 | Butoxyl |
| 7 | Xylol |
| 43 | BAC |
| 31 | BGA |
| 10 | Dipenten |
| 2 | Solvesso100 |

III.3. Versuchdurchführung für Prüfung der Lacke in einer künstlichen Bewitterung

In der Spritzkabine wurde das eingestellte Lacksystem (Klarlack) über eine Gaze in den Lackbehälter der Spritzpistole von Satajet 2000 HVLP eingefüllt und mit einem Luftdruck von 2 bar mit einem Kreuzgang auf Musterbleche der Firma VWR International GmbH, Größe 68 mm x 60 mm, Vorderseite weiß bedruckt, appliziert. Die gespritzten Musterbleche wurden 30 Minuten bei Raumtemperatur abgelüftet und danach bei 80 °C im Umluftofen eingebrannt. Untersuchungen am Lackfilm erfolgten am weißen Teil des Blechs. Nach dem Abkühlen der Musterbleche wurde der Glanzwert des Lackfilms bei 20° bzw. 60° mit dem Glanzmessgerät der Firma Byk Gardner, micro TRIgloss, gemessen. Danach erfolgte die Gelbwertmessung mit dem Spectraflash 600 von Data Color. Es wurden die Gelbwerte und Y 1313-Werte (Sellowness Index) gemessen. Danach wurden die Musterbleche der Bewitterung bis zu 2000 Stunden ausgesetzt. Die Bewitterungsprüfung erfolgte durch das Testverfahren SAE J 1960 (CAM 180) auf dem Gerät ATLAS CI 35A. Nach der Bewitterung wurden abermals die Glanz- bzw. Gelbwerte sowie Sellowness Index gemessen.

Tabelle 4: Messwerte des Bewitterungsversuchs, Bestrahlung nach 0 Stunden (Teil a) und nach 3000 Stunden (Teil b)

| (Teil a) | Nullprobe | L.1 | L.2 | L.3 | L.4 | L.5 | L.6 | L.7 |
|---|---|---|---|---|---|---|---|---|
| Glanz 20° | 81 | 82 | 83,5 | 81,5 | 81 | 81 | 82 | 80,5 |
| Glanz 60° | 92 | 92 | 92,5 | 93 | 91 | 92,5 | 92 | 92 |
| Gelbwert | -2,37 | -1,08 | -1,58 | -0,76 | -0,87 | -1,65 | -1,27 | -1,34 |
| YI313 | -0,67 | 0,50 | 0,05 | 0,80 | 0,71 | -0,02 | 0,34 | 0,19 |
| | | | | | | | | |
| (Teil b) | Nullprobe | L.1 | L.2 | L.3 | L.4 | L.5 | L.6 | L.7 |
| Glanz 20° | 73 | 74 | 73 | 74 | 74 | 69 | 70,5 | 69,5 |

(fortgesetzt)

| (Teil b) | Nullprobe | L.1 | L.2 | L.3 | L.4 | L.5 | L.6 | L.7 |
|---|---|---|---|---|---|---|---|---|
| Glanz 60° | 85 | 85 | 87,5 | 86,5 | 87,5 | 84 | 86 | 86 |
| Gelbwert | -6,24 | -4,83 | -4,47 | -4,14 | -3,86 | -4,29 | -4,10 | -4,73 |
| YI313 | -4,12 | -2,52 | -2,58 | -2,29 | -2,02 | -2,41 | -2,25 | -2,82 |

Die Glanzwerte wurden bei 20° und bei 60° bestimmt (auch als "Glanz 20°" bzw. "Glanz 60°" bezeichnet).

**Patentansprüche**

1. Hyperverzweigte Polycarbonate mit stabilisierend wirkenden Gruppen, hergestellt durch Umsetzung von

   (a) mindestens einer Verbindung mit mindestens drei alkoholischen Hydroxylgruppen pro Molekül mit
   (b) mindestens einem Reagenz der allgemeinen Formel I

   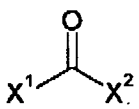

   I

   (c) und mindestens einem Reagenz der allgemeinen Formel $X^3$-A1-$X^4$,
   wobei die Variablen wie folgt definiert sind:

   $X^1$, $X^2$ gleich oder verschieden und gewählt aus Halogen, $C_1$-$C_{10}$-Alkoxy, $C_6$- $C_{10}$-Aryloxy und O-C(=O)-Halogen,
   $X^3$ eine funktionelle Gruppe, gewählt aus OH, SH, $NH_2$, NH-$C_1$-$C_4$-Alkyl, Isocyanat, Epoxy, COOH, $COOR_{12}$, C(=O)-O-C(=O), C(=O)-Cl,
   $R^{12}$ $C_1$-$C_4$-Alkyl oder $C_6$-$C_{10}$-Aryl,
   $A^1$ ein Spacer, gewählt aus para-Phenylen, meta-Phenylen und $C_1$-$C_{100}$- Alkylen, verzweigt oder unverzweigt, wobei gegebenenfalls ein bis 6 nicht-benachbarte $CH_2$-Gruppen durch je ein Schwefelatom, gegebenenfalls oxidiert, oder Sauerstoffatom ersetzt sein können,
   $X^4$ eine Gruppe, gewählt aus Benzophenonen, aromatischen Aminen und stickstoffhaltigen Heterocyclen, jeweils substituiert oder unsubsti- tuiert, und sterisch gehinderten Phenolgruppen.

2. Hyperverzweigte Polycarbonate nach Anspruch 1, **dadurch gekennzeichnet, dass** es sich bei $A^1$ um eine $C_1$-$C_{10}$-Alkylengruppe handelt.

3. Hyperverzweigte Polycarbonate nach Anspruch 1 oder 2, **dadurch gekennzeichnet, dass** es sich bei stickstoffhaltigen Heterocyclen um eine Gruppe der Formel II a oder II b handelt,

   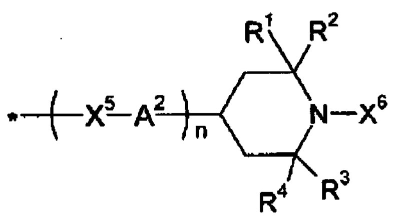

   II a

   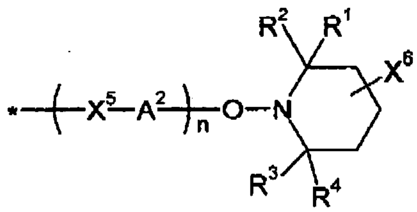

   II b

   wobei die Variablen wie folgt definiert sind:

$R^1$, $R^2$, $R^3$ und $R^4$ gleich oder verschieden und unabhängig voneinander $C_1$-$C_{10}$- Alkyl oder $C_3$-$C_{10}$-Cycloalkyl,
$X^5$ ein Sauerstoffatom, ein Schwefelatom, eine NH-Gruppe, eine N-($C_1$-$C_4$- Alkyl)-gruppe, eine Carbonylgruppe,
$A^2$ eine Einfachbindung oder ein Spacer,
n null oder eins
$X^6$ Wasserstoff, Sauerstoff, O-$C_1$-$C_{19}$-Alkyl, $C_1$-$C_{12}$-Alkyl, $C_2$-$C_{18}$-Acyl, oder Aryl oxycarbonyl mit 7 bis 12 C-Atomen.

4. Hyperverzweigte Polycarbonate nach einem der Ansprüche 1 bis 2, **dadurch gekennzeichnet, dass** es sich bei stickstoffhaltigen. Heterocyclen um eine Gruppe der Formel III

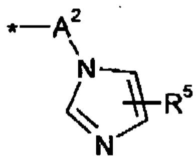

III

handelt, wobei die Variablen wie folgt definiert sind:

$R^5$ Wasserstoff oder lineares $C_1$-$C_4$-Alkyl,
$A^2$ ein Spacer.

5. Hyperverzweigte Polycarbonate nach einem der Ansprüche 1 bis 4, **dadurch gekennzeichnet, dass** mindestens eine Verbindung mit mindestens drei Hydroxylgruppen pro Molekül (a) gewählt wird aus Glycerin und $(HO\text{-}CH_2)_3X^7$, nicht alkoxyliert oder pro Hydroxylgruppe ein- bis hundertfach mit $C_2C_4$-Alkylenoxid alkoxyliert, wobei $X^7$ gewählt wird aus einem Stickstoffatom und C-$R^6$, wobei $R^6$ gewählt wird aus Wasserstoff und $C_1$-$C_4$-Alkyl.

6. Hyperverzweigte Polycarbonate nach einem der Ansprüche 1 bis 5, **dadurch gekennzeichnet, dass** sie eine dynamische Viskosität im Bereich von 100 bis 150.000 mPa·s aufweisen, bestimmt bei 23°C.

7. Hyperverzweigte Polycarbonate nach einem der Ansprüche 1 bis 6, **dadurch gekennzeichnet, dass** sie eine Glastemperatur Tg im Bereich von -70°C bis 10°C aufweisen.

8. Hyperverzweigte Polycarbonate nach einem der Ansprüche 1 bis 7, **dadurch gekennzeichnet, dass** man zu ihrer Herstellung mindestens eine Verbindung (a) mit mindestens drei alkoholischen Hydroxylgruppen pro Molekül im Gemisch mit mindestens einer Verbindung (d) mit zwei alkoholischen Hydroxylgruppen pro Molekül einsetzt.

9. Verfahren zur Herstellung von hyperverzweigten Polycarbonaten nach einem der Ansprüche 1 bis 8, **dadurch gekennzeichnet, dass** man

(a) mindestens eine Verbindung mit mindestens drei alkoholischen Hydroxylgruppen pro Molekül mit
(b) mindestens einem Reagenz der allgemeinen Formel I,
(c) mindestens einem Reagenz der allgemeinen Formel $X^3$-$A^1$-$X^4$
(d) und gegebenenfalls mindestens einer Verbindung mit zwei alkoholischen Hydroxylgruppen pro Molekül

miteinander vermischt und auf eine Temperatur im Bereich von 60 bis 260°C erhitzt.

10. Verfahren nach Anspruch 9, **dadurch gekennzeichnet, dass** man in Gegenwart von anorganischer oder organischer Base erhitzt.

11. Verwendung von einem oder mehreren hyperverzweigten Polycarbonaten nach einem der Ansprüche 1 bis 8 bei der Herstellung von Thermoplasten oder Duroplasten.

12. Verfahren zur Herstellung von Thermoplasten oder Duroplasten unter Verwendung von mindestens einem hyperverzweigten Polycarbonat nach einem der Ansprüche 1 bis 8.

13. Verwendung von einem oder mehreren hyperverzweigten Polycarbonaten nach einem der Ansprüche 1 bis 8 als

Zusatz in Druckfarben, Lacksystemen oder Beschichtungen.

**14.** Verfahren zur Herstellung von Polyoxymethylen unter Verwendung von mindestens einem hyperverzweigten Polycarbonat nach einem der Ansprüche 1 bis 8.

## Claims

**1.** A hyperbranched polycarbonate having stabilizing groups, prepared by reaction of

(a) at least one compound having at least three alcoholic hydroxyl groups per molecule with
(b) at least one reagent of the general formula I

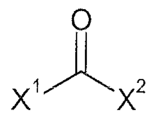
I

(c) and at least one reagent of the general formula $X^3$-$A^1$-$X^4$,

where the variables are defined as follows:

$X^1$, $X^2$ are identical or different and are selected from among halogen, $C_1$-$C_{10}$-alkoxy, $C_6$-$C_{10}$-aryloxy and O-C(=O)-halogen,
$X^3$ is a functional group selected from among OH, SH, $NH_2$, NH-$C_1$-$C_4$-alkyl, isocyanate, epoxy, COOH, $COOR^{12}$, C(=O)-O-C(=O), C(=O)-C1,
$R^{12}$ is $C_1$-$C_4$-alkyl or $C_6$-$C_{10}$-aryl,
$A^1$ is a spacer selected from among para-phenylene, meta-phenylene and $C_1$-$C_{100}$-alkylene, branched or unbranched, where from one to 6 nonadjacent $CH_2$ groups may optionally be replaced in each case by a sulfur atom, if appropriate oxidized, or oxygen atom
$X^4$ is a group selected from among benzophenones, aromatic amines and nitrogen-comprising heterocycles, in each case substituted or unsubstituted, and sterically hindered phenol groups.

**2.** The hyperbranched polycarbonate according to claim 1, wherein $A^1$ is a $C_1$-$C_{10}$-alkylene group.

**3.** The hyperbranched polycarbonate according to claim 1 or 2, wherein the nitrogen-comprising heterocycle is a group of the formula II a or II b,

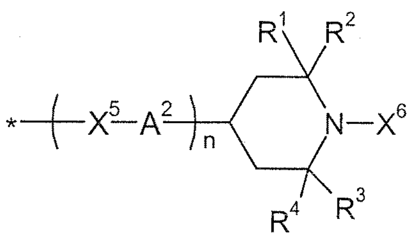
II a

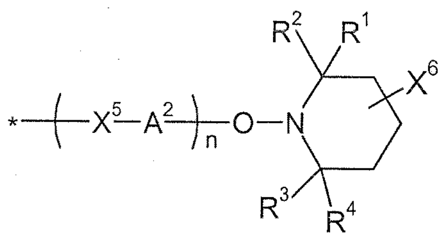
II b

where the variables are defined as follows:

$R^1$, $R^2$, $R^3$ and $R^4$ are identical or different and are each, independently of one another, $C_1$-$C_{10}$-alkyl or $C_3$-$C_{10}$-cycloalkyl,
$X^5$ is an oxygen atom, a sulfur atom, an NH group, an N-($C_1$-$C_4$-alkyl) group, a carbonyl group,

$A^2$ is a single bond or a spacer,
n is zero or one,
$X^6$ is hydrogen, oxygen, O-$C_1$-$C_{19}$-alkyl, $C_1$-$C_{12}$- alkyl, $C_2$-$C_{18}$-acyl, or aryloxycarbonyl having from 7 to 12 carbon atoms.

**4.** The hyperbranched polycarbonate according to either claim 1 or 2, wherein the nitrogen-comprising heterocycle is a group of the formula III

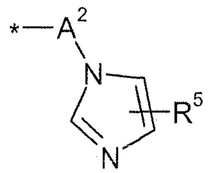

III

where the variables are defined as follows:

$R^5$ is hydrogen or linear $C_1$-$C_4$-alkyl,
$A^2$ is a spacer.

**5.** The hyperbranched polycarbonate according to any of claims 1 to 4, wherein at least one compound having at least three hydroxyl groups per molecule (a) is selected from among glycerol and $(HO\text{-}CH_2)_3X^7$, unalkoxylated or alkoxylated by from one to one hundred $C_2$-$C_4$-alkylene oxide units per hydroxyl group, where $X^7$ is selected from among a nitrogen atom and C-$R^6$, where $R^6$ is selected from among hydrogen and $C_1$-$C_4$-alkyl.

**6.** The hyperbranched polycarbonate according to any of claims 1 to 5 which has a dynamic viscosity in the range from 100 to 150 000 mPa·s determined at 23°C.

**7.** The hyperbranched polycarbonate according to any of claims 1 to 6 which has a glass transition temperature Tg in the range from -70°C to 10°C.

**8.** The hyperbranched polycarbonate according to any of claims 1 to 7 which is prepared using at least one compound (a) having at least three alcoholic hydroxyl groups per molecule in a mixture with at least one compound (d) having two alcoholic hydroxyl groups per molecule.

**9.** A process for preparing hyperbranched polycarbonates according to any of claims 1 to 8, which comprises mixing

(a) at least one compound having at least three alcoholic hydroxyl groups per molecule and
(b) at least one reagent of the general formula I,
(c) at least one reagent of the general formula $X^3$-$A^1$-$X^4$
(d) and, if appropriate, at least one compound having two alcoholic hydroxyl groups per molecule
with one another and heating them to a temperature in the range from 60 to 260°C.

**10.** The process according to claim 9, wherein heating is carried out in the presence of an inorganic or organic base.

**11.** The use of one or more hyperbranched polycarbonates according to any of claims 1 to 8 in the preparation of thermoplastics or thermosets.

**12.** A process for preparing thermoplastics or thermosets using at least one hyperbranched polycarbonate according to any of claims 1 to 8.

**13.** The use of one or more hyperbranched polycarbonates according to any of claims 1 to 8 as additive in printing inks, surface coating systems or coatings.

**14.** A process for preparing polyoxymethylene using at least one hyperbranched polycarbonate according to any of claims 1 to 8.

## Revendications

1. Polycarbonates hyperramifiés avec des groupes à effet stabilisant, préparés par transformation de (a) au moins un composé présentant au moins trois groupes hydroxyle alcooliques par molécule avec (b) au moins un réactif de formule générale I

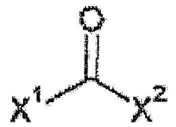

I

(c) et au moins un réactif de formule générale $X^3$-$A^1$-$X^4$,
les variables étant définies comme suit :

$X^1$, $X^2$ sont identiques ou différents et choisis parmi halogène, $C_1$-$C_{10}$-alcoxy, $C_6$-$C_{10}$-aryloxy et O-C(=O)-halogène,
$X^3$ représente un groupe fonctionnel, choisi parmi OH, SH, $NH_2$, NH-$C_1$-$C_4$-alkyle, isocyanate, époxy, COOH, $COOR^{12}$, C(=O)-O- C(=O), C(=O)-C1,
$R^{12}$ représente $C_1$-$C_4$-alkyle ou $C_6$-$C_{10}$-aryle,
$A^1$ représente un écarteur, choisi parmi le para- phénylène, le méta-phénylène et le $C_1$-$C_{100}$- alkylène, ramifié ou non ramifié, où le cas échéant un à 6 groupes $CH_2$ non adjacents peuvent être remplacés par à chaque fois un atome de soufre, le cas échéant oxydé, ou un atome d'oxygène,
$X^4$ représente un groupe, choisi parmi les benzophénones, les amines aromatiques et les hétérocycles contenant de l'azote, à chaque fois substitués ou non substitués, et les groupes phénol stériquement encombrés.

2. Polycarbonates hyperramifiés selon la revendication 1, **caractérisés en ce qu'**il s'agit, pour $A^1$, d'un groupe $C_1$-$C_{10}$-alkylène.

3. Polycarbonates hyperramifiés selon 1a revendication 1 ou 2, **caractérisés en ce qu'**il s'agit, pour les hétérocycles azotés, d'un groupe de formule IIa ou IIb,

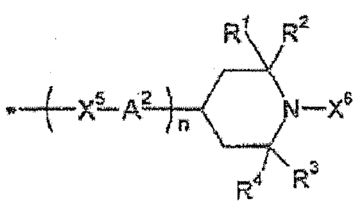

II a

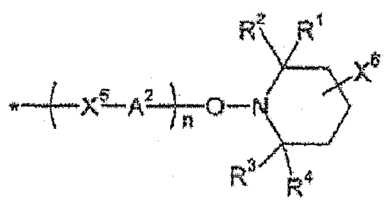

II b

les variables étant définies comme suit :

$R^1$, $R^2$ $R^3$ et $R^4$ sont identiques ou différents et représentent, indépendamment l'un de l'autre, $C_1$- $C_{10}$-alkyle ou $C_3$-$C_{10}$-cycloalkyle,
$X^5$ représente un atome d'oxygène, un atome de soufre, un groupe NH, un groupe N-($C_1$-$C_4$-alkyle), un groupe carbonyle,
$A^2$ représente une simple liaison ou un écarteur,
n vaut zéro ou 1,
$X^6$ représente hydrogène, oxygène, O-$C_1$-$C_{19}$-alkyle, $C_1$- $C_{12}$-alkyle, $C_2$-$C_{18}$-acyle, ou aryloxycarbonyle comprenant 7 à 12 atomes de carbone.

4. Polycarbonates hyperramifiés selon l'une quelconque des revendications 1 à 2, **caractérisés en ce qu'**il s'agit, pour les hétérocycles azotés, d'un groupe de formule III

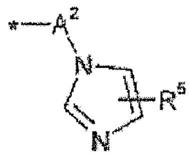

III

les variables étant définies comme suit :

$R^5$ représente hydrogène ou $C_1$-$C_4$-alkyle linéaire ,
$A^2$ représente un écarteur.

5. Polycarbonates hyperramifiés selon l'une quelconque des revendications 1 à 4, **caractérisés en ce qu'**au moins un composé comprenant au moins trois groupes hydroxyle par molécule (a) est choisi parmi le glycérol et $(HO\text{-}CH_2)_3X^7$, non alcoxylé ou alcoxylé, par groupe hydroxyle, une à cent fois avec de l'oxyde de $C_2$-$C_4$-alkylène, où $X^7$ est choisi parmi un atome d'azote et C-$R^6$ où $R^6$ est choisi parmi l'hydrogène et $C_1$-$C_4$-alkyle.

6. Polycarbonates hyperramifiés selon l'une quelconque des revendications 1 à 5, **caractérisés en ce qu'**ils présentent une viscosité dynamique dans la plage de 100 à 150 000 mPa.s, déterminée à 23°C.

7. Polycarbonates hyperramifiés selon l'une quelconque des revendications 1 à 6, **caractérisés en ce qu'**ils présentent une température de transition vitreuse Tg dans la plage de -70°C à 10°C.

8. Polycarbonates hyperramifiés selon l'une quelconque des revendications 1 à 7, **caractérisés en ce qu'**on utilise pour leur préparation au moins un composé (a) présentant au moins trois groupes hydroxyle alcooliques par molécule en mélange avec au moins un composé (d) avec deux groupes hydroxyle alcooliques par molécule.

9. Procédé pour la préparation de polycarbonates hyperramifiés selon l'une quelconque des revendications 1 à 8, **caractérisé en ce qu'**on mélange l'un avec l'autre

(a) au moins un composé présentant au moins trois groupes hydroxyle alcooliques par molécule avec
(b) au moins un réactif de formule générale I,
(c) au moins un réactif de formule générale $X^3$-$A^1$-$X^4$,
(d) et le cas échéant au moins un composé présentant au moins deux groupes hydroxyle alcooliques par molécule

et on chauffe à une température dans la plage de 60 à 260°C.

10. Procédé selon la revendication 9, **caractérisé en ce qu'**on chauffe en présence d'une base inorganique ou organique.

11. Utilisation d'un ou de plusieurs polycarbonates hyperramifiés selon l'une quelconque des revendications 1 à 8 lors de la préparation de thermoplastiques ou de plastiques thermodurcissables.

12. Procédé pour la préparation de thermoplastiques ou de plastiques thermodurcissables en utilisant au moins un polycarbonate hyperramifié selon l'une quelconque des revendications 1 à 8.

13. Utilisation d'un ou de plusieurs polycarbonates hyperramifiés selon l'une quelconque des revendications 1 à 8 comme additif dans les encres d'imprimerie, les systèmes de laque ou les revêtements.

14. Procédé pour la préparation de polyoxyméthylène en utilisant au moins un polycarbonate hyperramifié selon l'une quelconque des revendications 1 à 8.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 0148057 A
- WO 02092668 A
- EP 0080656 A1
- EP 0638357 A2
- EP 0638599 A2
- DE 10138216
- DE 10147712
- WO 0236695 A
- WO 0226697 A
- WO 0236697 A
- EP 0129369 A
- EP 0128739 A


### In der Beschreibung aufgeführte Nicht-Patentliteratur


- **E. Malmstroem Jonsson et al.** *Polymer Degradation and Stability,* 2002, vol. 76, 503-509
- **P.J. Flory.** *J. Am. Chem. Soc.,* 1952, vol. 74, 2718
- **H. Frey et al.** *Chem. Eur. J.,* 2000, vol. 6 (14), 2499
- **Gächter/Müller.** Plastics Additives Handbook. Hanser Verlag, 1993